# EUROPÄISCHE PATENTANMELDUNG

(11) **EP 4 254 780 A2**
(43) Veröffentlichungstag der Anmeldung: **04.10.2023**
(21) Anmeldenummer: 23192737.7
(22) Anmeldetag: 25.04.2016
(51) Int. Cl.: H02P 29/032

(54) **VERFAHREN ZUR AUSWAHL EINES FREQUENZUMRICHTERS FÜR EINE KÄLTEMITTELVERDICHTEREINHEIT**

(62) Teilanmeldung aus: 16718356.5
(71) Anmelder: BITZER Kühlmaschinenbau GmbH, 71065 Sindelfingen (DE)
(72) Erfinder: Gibson, John, 90768 Fürth (DE); Hieble, Tobias, 88175 Scheidegg (DE); Pfaffl, Julian, 72070 Tübingen (DE); Nill, Jürgen, 72116 Mössingen (DE); Breithuth, Ferdinand, 72076 Tübingen (DE)
(74) Vertreter: Hoeger, Stellrecht & Partner Patentanwälte mbB

(57) **Zusammenfassung**

Um ein Verfahren zur Auswahl eines Frequenzumrichters für eine Kältemittelverdichtereinheit, umfassend einen Kältemittelverdichter und einen elektrischen Antriebsmotor derart zu verbessern, dass der Frequenzumrichter anwendungsoptimiert ausgewählt wird, wird vorgeschlagen, dass ein für den Betrieb der Kältemittelverdichtereinheit geeigneter Arbeitszustand in einem Einsatzfeld eines Einsatzdiagramms des Kältemittelverdichters ausgewählt wird, dass zu diesem ausgewählten Arbeitszustand eine Betriebsfrequenz ausgewählt wird und dass aus Antriebsdaten ein dem ausgewählten Arbeitszustand und der ausgewählten Betriebsfrequenz entsprechender Arbeitszustandsbetriebsstromwert für den Betrieb der Kältemittelverdichtereinheit ermittelt wird.

## Beschreibung

Die Erfindung betrifft ein Verfahren zur Auswahl eines Frequenzumrichters für eine Kältemittelverdichtereinheit, umfassend einen Kältemittelverdichter und einen elektrischen Antriebsmotor.

Bislang wurden für die Kältemittelverdichtereinheiten die Frequenzumrichter stets so gewählt, dass der Frequenzumrichter die möglichen Arbeitszustände des Kältemittelverdichters nicht limitiert.

Dies hat zur Folge, dass bei den bislang bekannten Verfahren zur Auswahl des Frequenzumrichters stets Frequenzumrichter eingesetzt wurden, die unnötige Kosten verursachten.

Der Erfindung liegt daher die Aufgabe zugrunde, ein Verfahren zur Auswahl eines Frequenzumrichters dahingehend zu verbessern, dass der Frequenzumrichter anwendungsoptimiert ausgewählt wird.

Diese Aufgabe wird bei einem Verfahren der eingangs beschriebenen Art erfindungsgemäß dadurch gelöst, dass ein für den Betrieb der Kältemittelverdichtereinheit geeigneter Arbeitszustand in einem Einsatzfeld eines Einsatzdiagramms des Kältemittelverdichters ausgewählt wird, dass zu diesem ausgewählten Arbeitszustand eine Betriebsfrequenz ausgewählt wird und dass aus Antriebsdaten ein dem ausgewählten Arbeitszustand und der ausgewählten Betriebsfrequenz entsprechender Arbeitszustandsbetriebsstromwert für den Betrieb der Kältemittelverdichtereinheit ermittelt wird.

Der Vorteil der erfindungsgemäßen Lösung ist darin zu sehen, dass mit dem Arbeitszustandsbetriebsstromwert eine Richtgröße für die Auswahl des Frequenzumrichters zur Verfügung steht, die eine einfache Bestimmung des Frequenzumrichters erlaubt beispielsweise dahingehend, dass der auszuwählende Frequenzumrichter mindestens in der Lage sein muss, einen dem Arbeitszustandsbetriebsstromwert entsprechenden Strom am Ausgang zu erzeugen.

Beispielsweise werden bei der erfindungsgemäßen Lösung die Antriebsdaten vorab, insbesondere auch kältemittelabhängig, bestimmt und insbesondere für die spätere Nutzung bei der Auswahl des Frequenzumrichters abgespeichert.

Besonders einfach lässt sich der Frequenzumrichter dann auswählen, wenn anhand des Arbeitszustandsbetriebsstromwerts aus Daten von zur Auswahl stehenden Frequenzumrichtern derjenige Frequenzumrichter ausgewählt wird, dessen Umrichtermaximalstromwert gleich oder größer ist als der Arbeitszustandsbetriebsstromwert.

Beispielsweise sind hierzu die Daten der in Frage kommenden Frequenzumrichter in einer Liste zusammengefasst, die insbesondere als gespeicherte Datei zur Verfügung steht.

Mit dieser Vorgehensweise lässt sich somit die Auswahl des geeigneten Frequenzumrichters dahingehend optimieren, dass dieser so ausgewählt wird, dass dessen Umrichtermaximalstromwert ausreichend ist, um die Kältemittelverdichtereinheit in dem ausgewählten Arbeitszustand bei der ausgewählten Betriebsfrequenz sicher zu betreiben, es wird jedoch eine unnötig große Auslegung des Frequenzumrichters vermieden, so dass der für einen sicheren Betrieb kostengünstigste Frequenzumrichter ausgewählt wird.

Ferner ist es für die Optimierung der Auswahl des Frequenzumrichters von Vorteil, wenn derjenige Frequenzumrichter ausgewählt wird, dessen Umrichtermaximalstromwert möglichst nahe bei dem Arbeitszustandsbetriebsstromwert liegt.

Damit wird sichergestellt, dass der Frequenzumrichter hinsichtlich des Umrichtermaximalstromwerts keine zu große Auslegung erfährt.

Bei einer derartigen Fokussierung der Auslegung des Frequenzumrichters hinsichtlich des Umrichtermaximalstromwerts könnte der Fall eintreten, dass der Frequenzumrichter nicht in der Lage ist, den Anlaufstromwert für die Kältemittelverdichtereinheit aufzubringen.

Aus diesem Grund ist vorzugsweise vorgesehen, dass der Frequenzumrichter so ausgewählt wird, dass dessen Umrichteranlaufmaximalstromwert gleich oder größer ist als ein Anlaufstromwert der Kältemittelverdichtereinheit.

Vorzugsweise wird hier für die Auswahl des Frequenzumrichters ein abgespeicherter Anlaufstromwert herangezogen.

Hinsichtlich der Ermittlung des Anlaufstromwerts wurden diesbezüglich keine näheren Angaben gemacht.

So sieht eine vorteilhafte Lösung vor, dass der Anlaufstromwert experimentell bestimmt wird und insbesondere danach abgespeichert wird, um für die Auswahl des Frequenzumrichters zur Verfügung zu stehen.

Damit ist sichergestellt, dass der Anlaufstromwert den realen Bedingungen der Kältemittelverdichtereinheit entspricht.

Um ferner auch die Auswahl des Frequenzumrichters im Hinblick auf den Anlaufstromwert zu optimieren ist vorzugsweise vorgesehen, dass der Frequenzumrichter so ausgewählt wird, dass dessen Umrichteranlaufmaximalstromwert möglichst nahe bei dem Anlaufstromwert liegt, so dass auch diesbezüglich keine unnötig große Dimensionierung des Frequenzumrichters im Hinblick auf den Umrichtermaximalstromwert erfolgt.

Besonders zweckmäßig ist es, wenn der Frequenzumrichter so ausgewählt wird, dass dessen Umrichtermaximalstromwert möglichst nahe bei dem höheren der Werte von Arbeitszustandbetriebsstromwert und Anlaufstromwert liegt, so dass dadurch die Auslegung des Frequenzumrichters hinsichtlich seines Umrichtermaximalstromwerts auf den ausgewählten Arbeitszustand optimiert ist.

Hinsichtlich der Antriebsdaten wurden bislang keine näheren Angaben gemacht.

Eine besonders gut die Realität abbildende Lösung sieht vor, dass die Antriebsdaten experimentell bestimmt sind.

Ferner sieht eine vorteilhafte Lösung vor, dass zu jedem Arbeitszustand der Kältemittelverdichtereinheit experimentelle Antriebsdaten für die möglichen auszuwählenden Betriebsfrequenzen hinterlegt sind.

Ferner wurden hinsichtlich der auszuwählenden Betriebsfrequenzen ebenfalls keine näheren Angaben gemacht.

So sieht eine vorteilhafte Lösung vor, dass die auszuwählende Betriebsfrequenz im Bereich von 0 Hertz bis 140 Hertz liegt.

Vorzugsweise wird die auszuwählende Betriebsfrequenz im Bereich von einer Eckfrequenz des Frequenzumrichters bis zu einer Frequenz von 140 Hertz vorzugsweise bis 90 Hertz, liegen.

Ferner wurden die Antriebsdaten selbst nicht näher spezifiziert.

So sieht eine einfach zu realisierende Vorgehensweise vor, dass die Antriebsdaten die experimentell bestimmte elektrische Leistungsaufnahme zu jedem Arbeitszustand im Einsatzfeld bei den verschiedenen Betriebsfrequenzen aufweisen.

In diesem Fall ist es insbesondere möglich, auf der Basis der experimentell ermittelten elektrischen Leistungsaufnahme bei der jeweiligen Betriebsfrequenz unter Berücksichtigung eines Ersatzschaltbilds des Antriebsmotors der Kältemittelverdichtereinheit den Arbeitszustandsbetriebsstromwert bei der ausgewählten Betriebsfrequenz rechnerisch zu ermitteln.

Die rechnerische Ermittlung des Arbeitszustandsbetriebsstromwerts erfolgt insbesondere dadurch, dass zur Ermittlung des Arbeitszustandsbetriebsstromwerts die Impedanz des Ersatzschaltbilds des Antriebsmotors berücksichtigt wird.

Ferner ist vorzugsweise vorgesehen, dass zur Ermittlung des Arbeitszustandsbetriebsstromwerts die experimentell ermittelte Leistungsaufnahme der Kältemittelverdichtereinheit mit der sich aus dem Ersatzschaltbild ergebenden Leistungsaufnahme gleichgesetzt und daraus der Schlupf ermittelt wird, so dass dadurch sämtliche Parameter für die vollständige Berechnung des Arbeitszustandsbetriebsstromwerts vorhanden sind.

Damit lässt sich insbesondere anhand des ermittelten Schlupfes und der Impedanz des Ersatzschaltbildes des Antriebsmotors der Arbeitszustandsbetriebsstromwert ermitteln.

Hinsichtlich der experimentell ermittelten abgespeicherten Antriebsdaten wurden bislang keine weiteren spezifischen Angaben gemacht.

So sieht eine vorteilhafte Lösung vor, dass die experimentell bestimmte elektrische Leistungsaufnahme jedes Arbeitszustands im Einsatzfeld bei der jeweiligen Betriebsfrequenz festgehalten, insbesondere abgespeichert, wird.

Somit ist bei der Ermittlung des Arbeitszustandsbetriebsstromwerts noch die Berechnung desselben ausgehend von der elektrischen Leistungsaufnahme erforderlich, da zu dem ausgewählten Arbeitszustand lediglich die abgespeicherte elektrische Leistungsaufnahme in einem Speicher zur Verfügung steht.

Alternativ dazu sieht eine andere vorteilhafte Lösung vor, dass die aus der experimentell ermittelten Leistungsaufnahme errechneten Arbeitszustandsbetriebsstromwerte für den jeweiligen Arbeitszustand und die jeweilige Betriebsfrequenz festgehalten, insbesondere abgespeichert, werden.

Dies heißt, dass für jeden Arbeitszustand und jede Betriebsfrequenz bereits die Arbeitszustandsbetriebsstromwerte errechnet und diese gespeichert werden, so dass bei der Auswahl des Frequenzumrichters unmittelbar auf die bereits abgespeicherten Arbeitszustandsbetriebsstromwerte zugegriffen werden kann und keine rechnerische Ermittlung derselben noch vor der Auswahl erfolgen muss.

Bei einer weiteren vorteilhaften Lösung ist vorgesehen, dass der Arbeitszustandsbetriebsstromwert für jeden Arbeitszustand und für jede Betriebsfrequenz experimentell ermittelt und festgehalten, insbesondere abgespeichert, wird.

Diese Vorgehensweise ist hinsichtlich der experimentellen Ermittlung des Arbeitszustandsbetriebsstromwerts aufwändiger, macht jedoch eine Berechnung des Arbeitszustandsbetriebsstromwerts aus der elektrischen Leistungsaufnahme und Heranziehung des Ersatzschaltbildes überflüssig und kann daher bei bestimmten Umständen oder einer bestimmten Art des Ersatzschaltbildes eine günstige Lösung darstellen.

Da das erfindungsgemäße Verfahren zur Auswahl eines Frequenzumrichters die im Einsatzfeld des Einsatzdiagramms zur Verfügung stehenden Arbeitszustände des Kältemittelverdichters einschränkt, ist vorzugsweise vorgesehen, dass auf der Basis des Umrichtermaximalstromwerts des ausgewählten Frequenzumrichters die zu diesem Umrichtermaximalstromwert gehörenden Arbeitszustände im Einsatzfeld bei einer ausgewählten Betriebsfrequenz anhand der Antriebsdaten ermittelt werden.

Diese Ermittlung der Arbeitszustände ausgehend von dem nach der Auswahl des Frequenzumrichters bestimmten Umrichtermaximalstromwerts hat den großen Vorteil, dass damit die durch die erfindungsgemäße Auswahl des Frequenzumrichters bedingten Einschränkungen des Einsatzfeldes und der im Einsatzfeld realisierbaren Arbeitszustände bestimmt werden können.

Vorzugsweise ist hierzu vorgesehen, dass die zu dem Umrichtermaximalstromwert ermittelten Arbeitszustände visuell im Einsatzdiagramm dargestellt werden.

Insbesondere ist hierzu eine übliche Visualisierungseinheit vorgesehen, die einerseits das Einsatzdiagramm und andererseits die eine Begrenzung des Einsatzfeldes im Einsatzdiagramm bildenden Arbeitszustände darstellt.

Im Zusammenhang mit der bisherigen Erläuterung der erfindungsgemäßen Lösung wird davon ausgegangen, dass für die zur Auswahl gestellten Frequenzumrichter keine weiteren Spezifikationen gelten.

Dies hat jedoch den Nachteil, dass aufgrund der Einschränkungen des Einsatzfeldes Arbeitszustände auftreten können, bei welchen der Arbeitszustandsbetriebsstromwert bei hohen Betriebsfrequenzen den Umrichtermaximalstromwert überschreitet.

Üblicherweise führt dies bei einem konventionellen Frequenzumrichter zum Übergang in den Störungsbetrieb, um den Frequenzumrichter zu schützen.

Eine besonders vorteilhafte Ausführungsform des erfindungsgemäßen Verfahrens sieht jedoch vor, dass nur Frequenzumrichter zur Auswahl gestellt werden, die eine Frequenzbegrenzungseinheit umfassen, welche bei Betriebsfrequenzen oberhalb einer Eckfrequenz die Betriebsfrequenz derart begrenzt, dass der Umrichtermaximalstromwert des Frequenzumrichters nicht überschritten wird.

Eine derartige Frequenzbegrenzungseinheit hat somit den Vorteil, dass trotz der erfindungsgemäßen Auswahl des Frequenzumrichters Arbeitszustände der Kältemittelverdichtereinheit erlaubt sind, die allerdings nicht im ganzen Frequenzbereich, insbesondere nicht bei über der Eckfrequenz liegenden Betriebsfrequenzen, realisiert werden können, dass allerdings bei Realisierung derartiger Arbeitszustände der Frequenzumrichter selbst die Betriebsfrequenz derart begrenzt, dass kein Übergang in den Störungsbetrieb erfolgt.

Insbesondere ist hierzu vorgesehen, dass von der Frequenzbegrenzungseinheit der Arbeitszustandsbetriebsstromwert des Frequenzumrichters ständig erfasst wird.

In diesem Fall ist es dann insbesondere möglich, dass der Arbeitszustandsbetriebsstromwert des Frequenzumrichters mit einem Stromreferenzwert verglichen wird und die Betriebsfrequenz auf eine Grenzfrequenz begrenzt wird, die bei Erreichen des Stromreferenzwerts vorliegt.

Der Stromreferenzwert ist im einfachsten Fall unmittelbar der Umrichtermaximalstromwert.

Um jedoch auch den Fall zu erfassen, dass ein für die Kältemittelverdichtereinheit spezifisch festgelegter Verdichtermaximalbetriebsstromwert nicht überschritten wird, ist vorzugsweise vorgesehen, dass die Frequenzbegrenzungseinheit als Stromreferenzwert sowohl den Umrichtermaximalstromwert als auch den Verdichtermaximalbetriebsstromwert berücksichtigt und auf der Basis des niedrigsten der Maximalstromwerte die Grenzfrequenz ermittelt.

Damit ist sichergestellt, dass der ausgewählte Frequenzumrichter auch bei den nur bei bestimmten Betriebsfrequenzen realisierbaren Arbeitszuständen nicht in Störung geht, sondern es erlaubt, diese Arbeitszustände des Kältemittelverdichters zu realisieren, allerdings nur in einem eingeschränkten Bereich der Betriebsfrequenzen.

Darüber hinaus ist bei dem erfindungsgemäßen Verfahren noch vorgesehen, dass nur ein Frequenzumrichter zur Auswahl gestellt wird, bei welchem durch eine Spannungsanpassungseinheit ein Anstieg der Ausgangsspannung über der Betriebsfrequenz unabhängig von einer Schwankung einer Netzspannung erfolgt.

Diese Lösung hat den Vorteil, dass der ausgewählte Frequenzumrichter auch bei schwankender Netzspannung, insbesondere Schwankungen um bis zu 20 %, den für den Fluss im Antriebsmotor der Kältemittelverdichtereinheit wesentlichen Anstieg der Ausgangsspannung des Frequenzumrichters über der Betriebsfrequenz nicht verändert, sondern diesen Anstieg konstant hält.

Dies erfolgt insbesondere dadurch, dass eine Zwischenkreisspannung des Frequenzumrichters gemessen und durch einen Vergleich mit mindestens einem Referenzwert ein Spannungsverlauf der Ausgangsspannung des Frequenzumrichters korrigiert wird, um den Anstieg der Ausgangsspannung über der Betriebsfrequenz konstant zu halten.

Dabei stellt insbesondere die Zwischenkreisspannung eine für das erfindungsgemäße Verfahren günstige Spannung dar, da diese proportional zur Netzspannung ist und somit auch die Schwankungen der Netzspannung unmittelbar abbildet.

Des Weiteren betrifft die Erfindung eine Datenverarbeitungseinheit gemäß den Merkmalen der Ansprüche 28 bis 54, wobei hinsichtlich der Vorteile derselben auf die entsprechenden Ausführungen zu dem erfindungsgemäßen Verfahren Bezug genommen wird.

Ferner betrifft die Erfindung unabhängig von den vorstehend beschriebenen Lösungen oder aber auch in Kombination mit diesen eine Kältemittelverdichteranlage umfassend eine Kältemittelverdichtereinheit mit einem Kältemittelverdichter und einem elektrischen Antriebsmotor sowie umfassend einen Frequenzumrichter zum Betrieb des elektrischen Antriebsmotors, wobei der Frequenzumrichter eine Frequenzbegrenzungseinheit umfasst, welche bei Betriebsfrequenzen oberhalb einer Eckfrequenz die Betriebsfrequenz derart begrenzt, dass der Umrichtermaximalstromwert des Frequenzumrichters nicht überschritten wird.

Eine derartige Frequenzbegrenzungseinheit hat somit den Vorteil, dass bei dieser auch ohne besondere Eingriffe ein Betrieb der Kältemittelverdichteranlage bei Arbeitszuständen der Kältemittelverdichtereinheit möglich ist, die nicht im ganzen Frequenzbereich, insbesondere nicht bei allen über der Eckfrequenz liegenden Betriebsfrequenzen, mit dem zur Verfügung stehenden Umrichtermaximalbetriebsstrom, realisiert werden können, da bei Realisierung derartiger Arbeitszustände der Frequenzumrichter selbst die Betriebsfrequenz derart begrenzt, dass kein Übergang in den Störungsbetrieb erfolgt.

Insbesondere ist hierzu vorgesehen, dass von der Frequenzbegrenzungseinheit der Arbeitszustandsbetriebsstromwert des Frequenzumrichters ständig erfasst wird.

In diesem Fall ist es dann insbesondere möglich, dass der Arbeitszustandsbetriebsstromwert des Frequenzumrichters mit einem Stromreferenzwert verglichen wird und die Betriebsfrequenz auf eine Grenzfrequenz begrenzt wird, die bei Erreichen des Stromreferenzwerts vorliegt.

Der Stromreferenzwert ist im einfachsten Fall unmittelbar der Umrichtermaximalstromwert.

Um jedoch auch den Fall zu erfassen, dass ein für die Kältemittelverdichtereinheit spezifisch festgelegter Verdichtermaximalbetriebsstromwert nicht überschritten wird, ist vorzugsweise vorgesehen, dass die Frequenzbegrenzungseinheit als Stromreferenzwert sowohl den Umrichtermaximalstromwert als auch den Verdichtermaximalbetriebsstromwert berücksichtigt und auf der Basis des niedrigsten der Maximalstromwerte die Grenzfrequenz ermittelt.

Damit ist sichergestellt, dass der ausgewählte Frequenzumrichter auch bei den nur bei bestimmten Betriebsfrequenzen realisierbaren Arbeitszuständen nicht in Störung geht, sondern es erlaubt, diese Arbeitszustände des Kältemittelverdichters zu realisieren, allerdings nur in einem eingeschränkten Bereich der Betriebsfrequenzen.

Die Erfindung betrifft ferner unabhängig von den vorstehend beschriebenen Lösungen oder aber auch in Kombination mit diesen eine Kältemittelverdichteranlage umfassend eine Kältemittelverdichtereinheit mit einem Kältemittelverdichter und einem elektrischen Antriebsmotor sowie umfassend einen Frequenzumrichter zum Betrieb des elektrischen Antriebsmotors, wobei der Frequenzumrichter eine Spannungsanpassungseinheit umfasst, die einen Anstieg der Ausgangsspannung über der Betriebsfrequenz so steuert, dass dieser unabhängig von einer Schwankung einer Netzspannung erfolgt.

Diese Lösung hat den Vorteil, dass der ausgewählte Frequenzumrichter auch bei schwankender Netzspannung, insbesondere Schwankungen um bis zu 20 %, den für den Fluss im Antriebsmotor der Kältemittelverdichtereinheit wesentlichen Anstieg der Ausgangsspannung des Frequenzumrichters über der Betriebsfrequenz nicht verändert, sondern diesen Anstieg konstant hält.

Dies erfolgt insbesondere dadurch, dass die Spannungsanpassungseinheit eine Zwischenkreisspannung des Frequenzumrichters erfasst und durch einen Vergleich mit mindestens einem Referenzwert den Anstieg der Ausgangsspannung des Frequenzumrichters bei Abweichungen von dem mindestens einen Referenzwert korrigiert, um den Anstieg der Ausgangsspannung über der Betriebsfrequenz konstant zu halten.

Dabei stellt insbesondere die Zwischenkreisspannung eine für das erfindungsgemäße Verfahren günstige Spannung dar, da diese proportional zur Netzspannung ist und somit auch die Schwankungen der Netzspannung unmittelbar abbildet.

Die Korrektur des Anstiegs der Ausgangsspannung über der Betriebsfrequenz lässt sich dann einfach realisieren, wenn die Spannungsanpassungseinheit einen Proportionalitätskorrekturfaktor erzeugt, mit welchem eine Korrektur des Anstiegs der Ausgangsspannung des Frequenzumrichters erfolgt.

Hinsichtlich der Referenzwerte wurden noch keine präzisierten Angaben gemacht.

Es hat sich als günstig erwiesen, wenn die von der Spannungsanpassungseinheit verwendeten Referenzwerte mindestens einen der Werte wie: eine Referenzfrequenz, einen Proportionalitätsfaktor und einen Zwischenkreisspannungssollwert umfasst.

Eine zur Korrektur des Anstiegs der Ausgangsspannung vorteilhafte Lösung sieht vor, dass der Frequenzumrichter eine Frequenzumrichtersteuerung aufweist, welche auf der Basis eines Frequenzanforderungssignals ein Spannungssteuerungssignal erzeugt, welches zusätzlich zu dem Frequenzanforderungssignal einer Wechselrichterstufensteuerung einer Wechselrichterstufe des Frequenzumrichters zugeführt wird und dass die Spannungsanpassungseinheit mit der Frequenzumrichtersteuerung zur Steuerung des Anstiegs der Ausgangsspannung über der Betriebsfrequenz zusammenwirkt.

Hinsichtlich der Ausbildung der Frequenzumrichtersteuerung ist vorzugsweise vorgesehen, dass die Frequenzumrichtersteuerung ein Proportionalglied aufweist, welches auf der Basis des Frequenzanforderungssignals des Spannungssteuerungssignals das Spannungssteuerungssignal erzeugt und dass die Spannungsanpassungseinheit ein Proportionalitätsverhalten des Proportionalgliedes korrigiert.

Insbesondere ist hierbei vorgesehen, dass mit dem Proportionalitätskorrekturfaktor die Korrektur des Proportionalitätsverhaltens des Proportionalgliedes erfolgt.

Die vorstehende Beschreibung erfindungsgemäßer Lösungen umfasst somit insbesondere die durch die nachfolgenden durchnummerierten Ausführungsformen definierten verschiedenen Merkmalskombinationen:
1. Verfahren zur Auswahl eines Frequenzumrichters (40) für eine Kältemittelverdichtereinheit (20), umfassend einen Kältemittelverdichter (22) und einen elektrischen Antriebsmotor (24), wobei dass ein für den Betrieb der Kältemittelverdichtereinheit (20) geeigneter Arbeitszustand (AZ) in einem Einsatzfeld (EF) eines Einsatzdiagramms (36) des Kältemittelverdichters (22) ausgewählt wird, dass zu diesem ausgewählten Arbeitszustand (AZₛ) eine Betriebsfrequenz (fₛ) ausgewählt wird und dass aus Antriebsdaten ein dem ausgewählten Arbeitszustand (AZₛ) und der ausgewählten Betriebsfrequenz (fₛ) entsprechender Arbeitszustandsbetriebsstromwert (I_{AZfs}) für den Betrieb der Kältemittelverdichtereinheit (20) ermittelt wird.
2. Verfahren nach Ausführungsform 1, wobei anhand des Arbeitszustandsbetriebsstromwerts (I_{AZfs}) aus Daten (I_{FUMAX}) von zur Auswahl stehenden Frequenzumrichtern (40) derjenige Frequenzumrichter (40s) ausgewählt wird, dessen Umrichtermaximalstromwert (I_{FUMAX}) gleich oder größer ist als der ermittelte Arbeitszustandsbetriebsstromwert (I_{AZfs})
3. Verfahren nach Ausführungsform 2, wobei derjenige Frequenzumrichter (40s) ausgewählt wird, dessen Umrichtermaximalstromwert (I_{FUMAX}) möglichst nahe bei dem Arbeitszustandsbetriebsstromwert (I_{AZfs}) liegt.
4. Verfahren nach einer der Ausführungsformen 1 bis 3, wobei der Frequenzumrichter (40s) so ausgewählt wird, dass dessen Umrichteranlaufmaximalstromwert (I_{FUANLMAX}) gleich oder größer ist als ein Anlaufstromwert (I_{ANL}) der Kältemittelverdichtereinheit (20).
5. Verfahren nach Ausführungsform 4, wobei für die Auswahl des Frequenzumrichters (40) ein abgespeicherter Anlaufstromwert (I_{ANL}) herangezogen wird.
6. Verfahren nach Ausführungsform 4 oder 5, wobei der Anlaufstromwert (I_{ANL}) experimentell bestimmt wird.
7. Verfahren nach einer der Ausführungsformen 4 bis 6, wobei der Frequenzumrichter (40s) so ausgewählt wird, dass dessen Umrichtermaximalstromwert (I_{FUMAX}) möglichst nahe bei dem Anlaufstromwert (I_{ANL}) liegt.
8. Verfahren nach einer der Ausführungsformen 4 bis 7, wobei der Frequenzumrichter (40s) so ausgewählt wird, dass dessen Umrichtermaximalstromwert (I_{FUMAX}) möglichst nahe bei dem höheren der Werte von Arbeitszustandsbetriebsstromwert (I_{AZfS}) und Anlaufstromwert (I_{ANL}) liegt.
9. Verfahren nach einer der voranstehenden Ausführungsformen, wobei die Antriebsdaten experimentell bestimmt sind.
10. Verfahren nach einer der voranstehenden Ausführungsformen, wobei zu jedem Arbeitszustand (AZ) der Kältemittelverdichtereinheit (20) experimentelle Antriebsdaten für die möglichen auszuwählenden Betriebsfrequenzen (f) hinterlegt sind.
11. Verfahren nach einer der voranstehenden Ausführungsformen, wobei die auszuwählende Betriebsfrequenz (f) im Bereich von 0 Hertz bis 140 Hertz liegt.
12. Verfahren nach einer der voranstehenden Ausführungsformen, wobei die Antriebsdaten die experimentell bestimmte Leistungsaufnahme (P_{AZEXf}) zu jedem Arbeitszustand (AZ) im Einsatzfeld (EF) bei den verschiedenen Betriebsfrequenzen (f) aufweisen.
13. Verfahren nach Ausführungsform 12, wobei auf der Basis der experimentell ermittelten elektrischen Leistungsaufnahme (P_{AZEX}) bei der jeweiligen Betriebsfrequenz (f) unter Berücksichtigung eines Ersatzschaltbilds des Antriebsmotors (24) der Kältemittelverdichtereinheit (20) der Arbeitszustandsbetriebsstromwert (I_{AZfs}) bei der ausgewählten Betriebsfrequenz (fₛ) rechnerisch ermittelt wird.
14. Verfahren nach einer der voranstehenden Ausführungsformen, wobei zur Ermittlung des Arbeitszustandsbetriebsstromwerts (I_{AZ}) die Impedanz (Z) des Ersatzschaltbilds des Antriebsmotors (24) berücksichtigt wird.
15. Verfahren nach Ausführungsform 14, wobei zur Ermittlung des Arbeitszustandsbetriebsstromwerts (I_{AZ}) die experimentell ermittelte elektrische Leistungsaufnahme (P_{AZEX}) der Kältemittelverdichtereinheit (20) mit der sich aus dem Ersatzschaltbild ergebenden Leistungsaufnahme (P_{AZ}) gleichgesetzt und daraus der Schlupf (s) ermittelt wird.
16. Verfahren nach Ausführungsform 14 oder 15, wobei anhand des ermittelten Schlupfes (s) und der Impedanz (Z) des Ersatzschaltbildes des Antriebsmotors (24) der Arbeitszustandsbetriebsstromwert (I_{AZ}) ermittelt wird.
17. Verfahren nach einer der voranstehenden Ausführungsformen, wobei die experimentell bestimmte elektrische Leistungsaufnahme (P_{AZ}) jedes Arbeitszustands (AZ) im Einsatzfeld (EF) bei der jeweiligen Betriebsfrequenz (f) festgehalten, insbesondere abgespeichert, wird.
18. Verfahren nach einer der Ausführungsformen 1 bis 16, wobei die aus der experimentell ermittelten elektrischen Leistungsaufnahme (P_{AZEX}) errechneten Arbeitszustandsbetriebsstromwerte (I_{AZf}) für jeden Arbeitszustand (AZ) und für jede Betriebsfrequenz (f) festgehalten, insbesondere abgespeichert, werden.
19. Verfahren nach einer der Ausführungsformen 1 bis 16, wobei Arbeitszustandsbetriebsstromwert (I_{AZf}) für jeden Arbeitszustand (AZ) und jede Betriebsfrequenz (f) experimentell ermittelt und festgehalten, insbesondere abgespeichert, wird.
20. Verfahren nach einer der voranstehenden Ausführungsformen, wobei auf der Basis des Umrichtermaximalstromwerts (I_{FUMAXs}) des ausgewählten Frequenzumrichters (40s) die zu diesem Umrichtermaximalstromwert (I_{FUMAXs}) gehörenden Arbeitszustände (AZCAL) im Einsatzfeld (EF) bei einer ausgewählten Betriebsfrequenz (f) anhand der Antriebsdaten ermittelt werden.
21. Verfahren nach Ausführungsform 20, wobei die zu dem Umrichtermaximalstromwert (I_{FUMAX}) ermittelten Arbeitszustände (AZCAL) visuell im Einsatzdiagramm (36) dargestellt werden.
22. Verfahren nach einer der voranstehenden Ausführungsformen, wobei nur Frequenzumrichter (40) ausgewählt werden, die eine Frequenzbegrenzungseinheit (80) umfassen, welche bei Betriebsfrequenzen (f) oberhalb einer Eckfrequenz (f_{ECK}) die Betriebsfrequenz (f) derart begrenzt, dass der Umrichtermaximalstromwert (I_{FUMAX}) des Frequenzumrichters (40) nicht überschritten wird.
23. Verfahren nach Ausführungsform 22, wobei von der Frequenzbegrenzungseinheit (80) der Arbeitszustandsbetriebsstromwert (I_{AZ}) des Frequenzumrichters (40) ständig erfasst wird.
24. Verfahren nach Ausführungsform 22 oder 23, wobei der Arbeitszustandsbetriebsstromwert (I_{AZfs}) des Frequenzumrichters (40) mit einem Stromreferenzwert verglichen wird und die Betriebsfrequenz (f) auf eine Grenzfrequenz (f_{L}) begrenzt wird, die bei Erreichen des Stromreferenzwerts vorliegt.
25. Verfahren nach Ausführungsform 24, wobei die Frequenzbegrenzungseinheit (80) als Stromreferenzwert sowohl den Umrichtermaximalstromwert (I_{FUMAX}) als auch den Verdichtermaximalbetriebsstromwert (I_{VMAX}) berücksichtigt und auf der Basis des niedrigsten der Maximalstromwerte die Grenzfrequenz (f_{L}) ermittelt.
26. Verfahren nach einer der voranstehenden Ausführungsformen, wobei nur ein Frequenzumrichter (40) zur Auswahl gestellt wird, bei welchem durch eine Spannungsanpassungseinheit (130) ein Anstieg der Ausgangsspannung (U_{F}) über der Betriebsfrequenz (f) unabhängig von einer Schwankung einer Netzspannung (U_{N}) erfolgt.
27. Verfahren nach Ausführungsform 26, wobei eine Zwischenkreisspannung (Uz) des Frequenzumrichters (40) gemessen und durch einen Vergleich mit mindestens einem Referenzwert ein Spannungsverlauf der Ausgangsspannung (U_{FU}) korrigiert wird.
28. Datenverarbeitungseinheit (50) zur Auswahl eines Frequenzumrichters (40) für eine Kältemittelverdichtereinheit (20), umfassend einen Kältemittelverdichter (22) und einen elektrischen Antriebsmotor (24), wobei die Datenverarbeitungseinheit eine Visualisierungseinheit (53) auf welcher ein für den Betrieb der Kältemittelverdichtereinheit (20) geeigneter Arbeitszustand (AZ) in einem Einsatzfeld (EF) eines Einsatzdiagramms (36) des Kältemittelverdichters (22) ausgewählt und zu diesem ausgewählten Arbeitszustand (AZₛ) eine Betriebsfrequenz (fₛ) ausgewählt wird und dass die Datenverarbeitungseinheit (50) aus in einem Speicher (54) abgespeicherten, Antriebsdaten einen dem ausgewählten Arbeitszustand (AZₛ) und der ausgewählten Betriebsfrequenz (fₛ) entsprechender Arbeitszustandsbetriebsstromwert (I_{AZfs}) für den Betrieb der Kältemittelverdichtereinheit (20) ermittelt.
29. Datenverarbeitungseinheit (50) nach Ausführungsform 28, wobei die Datenverarbeitungseinheit (50) anhand des Arbeitszustandsbetriebsstromwerts (I_{AZfs}) aus abgespeicherten Daten (I_{FUMAX}) von zur Auswahl stehenden Frequenzumrichtern (40) denjenigen Frequenzumrichter (40s) auswählt, dessen Umrichtermaximalstromwert (I_{FUMAX}) gleich oder größer ist als der ermittelte Arbeitszustandsbetriebsstromwert (I_{AZfs}).
30. Datenverarbeitungseinheit (50) nach Ausführungsform 29, wobei die Datenverarbeitungseinheit (50) denjenigen Frequenzumrichter (40s) auswählt, dessen Umrichtermaximalstromwert (I_{FUMAX}) möglichst nahe bei dem Arbeitszustandsbetriebsstromwert (I_{AZfs}) liegt.
31. Datenverarbeitungseinheit (50) nach einer der Ausführungsformen 28 bis 30, wobei die Datenverarbeitungseinheit (50) den Frequenzumrichter (40s) so auswählt, dass dessen Umrichteranlaufmaximalstromwert (I_{FUANLMAX}) gleich oder größer ist als ein Anlaufstromwert (I_{ANL}) der Kältemittelverdichtereinheit (20).
32. Datenverarbeitungseinheit (50) nach Ausführungsform 31, wobei die Datenverarbeitungseinheit (50) für die Auswahl des Frequenzumrichters (40) einen in einem Speicher (58) abgespeicherten Anlaufstromwert (I_{ANL}) heranzieht.
33. Datenverarbeitungseinheit (50) nach Ausführungsform 31 oder 32, wobei der Anlaufstromwert (I_{ANL}) experimentell bestimmt ist.
34. Datenverarbeitungseinheit (50) nach einer der Ausführungsformen 31 bis 33, wobei die Datenverarbeitungseinheit (50) den Frequenzumrichter (40s) so auswählt, dass dessen Umrichtermaximalstromwert (I_{FUMAX}) möglichst nahe bei dem Anlaufstromwert (I_{ANL}) liegt.
35. Datenverarbeitungseinheit (50) nach einer der Ausführungsformen 31 bis 34, wobei die Datenverarbeitungseinheit (50) den Frequenzumrichter (40s) so auswählt, dass dessen Umrichtermaximalstromwert (I_{FUMAX}) möglichst nahe bei dem höheren der Werte von Arbeitszustandsbetriebsstromwert (I_{AZfS}) und Anlaufstromwert (I_{ANL}) liegt.
36. Datenverarbeitungseinheit (50) nach einer der Ausführungsformen 28 bis 35, wobei die Antriebsdaten experimentell bestimmt sind.
37. Datenverarbeitungseinheit (50) nach einer der Ausführungsformen 28 bis 36, wobei zu jedem Arbeitszustand (AZ) der Kältemittelverdichtereinheit (20) experimentelle Antriebsdaten für die möglichen auszuwählenden Betriebsfrequenzen (f) in dem Speicher (54) hinterlegt sind.
38. Datenverarbeitungseinheit (50) nach einer der Ausführungsformen 28 bis 37, wobei die auszuwählende Betriebsfrequenz (f) im Bereich von 0 Hertz bis 140 Hertz liegt.
39. Datenverarbeitungseinheit (50) nach einer der Ausführungsformen 28 bis 38, wobei die Antriebsdaten die experimentell bestimmte Leistungsaufnahme (P_{AZEXf}) zu jedem Arbeitszustand (AZ) im Einsatzfeld (EF) bei den verschiedenen Betriebsfrequenzen (f) aufweisen.
40. Datenverarbeitungseinheit (50) nach Ausführungsform 39, wobei die Datenverarbeitungseinheit (50) auf der Basis der experimentell ermittelten elektrischen Leistungsaufnahme (P_{AZEX}) bei der jeweiligen Betriebsfrequenz (f) unter Berücksichtigung eines Ersatzschaltbilds des Antriebsmotors (24) der Kältemittelverdichtereinheit (20) den Arbeitszustandsbetriebsstromwert (I_{AZfs}) bei der ausgewählten Betriebsfrequenz (fₛ) rechnerisch ermittelt.
41. Datenverarbeitungseinheit (50) nach einer der Ausführungsformen 28 bis 40, wobei die Datenverarbeitungseinheit (50) zur Ermittlung des Arbeitszustandsbetriebsstromwerts (I_{AZ}) die Impedanz (Z) des Ersatzschaltbilds des Antriebsmotors (24) berücksichtigt.
42. Datenverarbeitungseinheit (50) nach Ausführungsform 41, wobei die Datenverarbeitungseinheit (50) zur Ermittlung des Arbeitszustandsbetriebsstromwerts (I_{AZ}) die experimentell ermittelte elektrische Leistungsaufnahme (P_{AZEX}) der Kältemittelverdichtereinheit (20) mit der sich aus dem Ersatzschaltbild ergebenden Leistungsaufnahme (P_{AZ}) gleichsetzt und daraus der Schlupf (s) ermittelt.
43. Datenverarbeitungseinheit (50) nach Ausführungsform 41 oder 42, wobei die Datenverarbeitungseinheit (50) anhand des ermittelten Schlupfes (s) und der Impedanz (Z) des Ersatzschaltbildes des Antriebsmotors (24) den Arbeitszustandsbetriebsstromwert (I_{AZ}) ermittelt.
44. Datenverarbeitungseinheit (50) nach einer der Ausführungsformen 28 bis 43, wobei die Datenverarbeitungseinheit (50) die experimentell bestimmte elektrische Leistungsaufnahme (P_{AZ}) jedes Arbeitszustands (AZ) im Einsatzfeld (EF) bei der jeweiligen Betriebsfrequenz (f) abspeichert.
45. Datenverarbeitungseinheit (50) nach einer der Ausführungsformen 28 bis 43, wobei die Datenverarbeitungseinheit (50) die aus der experimentell ermittelten elektrischen Leistungsaufnahme (P_{AZEX}) errechneten Arbeitszustandsbetriebsstromwerte (I_{AZf}) für jeden Arbeitszustand (AZ) und für jede Betriebsfrequenz (f) abspeichert.
46. Datenverarbeitungseinheit (50) nach einer der Ausführungsformen 28 bis 43, wobei Arbeitszustandsbetriebsstromwert (I_{AZf}) für jeden Arbeitszustand (AZ) und jede Betriebsfrequenz (f) experimentell ermittelt und von der Datenverarbeitungseinheit (50) abgespeichert, wird.
47. Datenverarbeitungseinheit (50) nach einer der Ausführungsformen 28 bis 46, wobei die Datenverarbeitungseinheit (50) auf der Basis des Umrichtermaximalstromwerts (I_{FUMAXs}) des ausgewählten Frequenzumrichters (40s) die zu diesem Umrichtermaximalstromwert (I_{FUMAXs}) gehörenden Arbeitszustände (AZCAL) im Einsatzfeld (EF) bei einer ausgewählten Betriebsfrequenz (f) anhand der Antriebsdaten ermittelt.
48. Datenverarbeitungseinheit (50) nach Ausführungsform 47, wobei die Datenverarbeitungseinheit (50) die zu dem Umrichtermaximalstromwert (I_{FUMAX}) ermittelten Arbeitszustände (AZCAL) auf der Visualisierungseinheit (53) im Einsatzdiagramm (36) darstellt.
49. Datenverarbeitungseinheit (50) nach einer der Ausführungsformen 28 bis 48, wobei die Datenverarbeitungseinheit (50) nur Frequenzumrichter (40) ausgewählt, die eine Frequenzbegrenzungseinheit (80) umfassen, welche bei Betriebsfrequenzen (f) oberhalb einer Eckfrequenz (f_{ECK}) die Betriebsfrequenz (f) derart begrenzt, dass der Umrichtermaximalstromwert (I_{FUMAX}) des Frequenzumrichters (40) nicht überschritten wird.
50. Datenverarbeitungseinheit (50) nach Ausführungsform 49, wobei von der Frequenzbegrenzungseinheit (80) der Arbeitszustandsbetriebsstromwert (I_{AZ}) des Frequenzumrichters (40) ständig erfasst wird.
51. Datenverarbeitungseinheit (50) nach Ausführungsform 49 oder 50, wobei der Arbeitszustandsbetriebsstromwert (I_{AZfs}) des Frequenzumrichters (40) mit einem Stromreferenzwert verglichen wird und die Betriebsfrequenz (f) auf eine Grenzfrequenz (f_{L}) begrenzt wird, die bei Erreichen des Stromreferenzwerts vorliegt.
52. Datenverarbeitungseinheit (50) nach Ausführungsform 51, wobei die Frequenzbegrenzungseinheit (80) als Stromreferenzwert sowohl den Umrichtermaximalstromwert (I_{FUMAX}) als auch den Verdichtermaximalbetriebsstromwert (I_{VMAX}) berücksichtigt und auf der Basis des niedrigsten der Maximalstromwerte die Grenzfrequenz (f_{L}) ermittelt.
53. Datenverarbeitungseinheit (50) nach einer der voranstehenden Ausführungsformen, wobei von der Datenverarbeitungseinheit (50) nur ein Frequenzumrichter (40) zur Auswahl gestellt wird, bei welchem durch eine Spannungsanpassungseinheit (130) einen Anstieg der Ausgangsspannung (U_{F}) über der Betriebsfrequenz (f) unabhängig von einer Schwankung einer Netzspannung (U_{N}) erfolgt.
54. Datenverarbeitungseinheit (50) nach Ausführungsform 53, wobei eine Zwischenkreisspannung (Uz) des Frequenzumrichters (40) gemessen und durch einen Vergleich mit mindestens einem Referenzwert ein Spannungsverlauf der Ausgangsspannung (U_{FU}) korrigiert wird.
55. Kältemittelverdichteranlage umfassend eine Kältemittelverdichtereinheit (20) mit einem Kältemittelverdichter (22) und einem elektrischen Antriebsmotor (24) sowie einen Frequenzumrichter (40) zum Betreiben des elektrischen Antriebsmotors (24), wobei der Frequenzumrichter (40) eine Frequenzbegrenzungseinheit (80) umfasst, welche bei Betriebsfrequenzen (f) oberhalb einer Eckfrequenz (f_{ECK}) die Betriebsfrequenz (f) derart begrenzt, dass der Umrichtermaximalstromwert (I_{FUMAX}) des Frequenzumrichters (40) nicht überschritten wird.
56. Kältemittelverdichteranlage nach Ausführungsform 55, wobei von der Frequenzbegrenzungseinheit (80) der Arbeitszustandsbetriebsstromwert (I_{AZ}) des Frequenzumrichters (40) ständig erfasst wird.
57. Kältemittelverdichteranlage nach Ausführungsform 55 oder 56, wobei der Arbeitszustandsbetriebsstromwert (I_{AZfs}) des Frequenzumrichters (40) mit einem Stromreferenzwert verglichen wird und die Betriebsfrequenz (f) auf eine Grenzfrequenz (f_{L}) begrenzt wird, die bei Erreichen des Stromreferenzwerts vorliegt.
58. Kältemittelverdichteranlage nach Ausführungsform 57, wobei die Frequenzbegrenzungseinheit (80) als Stromreferenzwert sowohl den Umrichtermaximalstromwert (I_{FUMAX}) als auch den Verdichtermaximalbetriebsstromwert (I_{VMAX}) berücksichtigt und auf der Basis des niedrigsten der Maximalstromwerte die Grenzfrequenz (f_{L}) ermittelt.
59. Kältemittelverdichteranlage nach dem Oberbegriff der Ausführungsform 55 oder nach einer der Ausführungsformen 55 bis 58, wobei der Frequenzumrichter (40) eine Spannungsanpassungseinheit (130) umfasst, die einen Anstieg der Ausgangsspannung (U_{F}) über der Betriebsfrequenz (f) so steuert, dass dieser unabhängig von einer Schwankung einer Netzspannung (U_{N}) erfolgt.
60. Kältemittelverdichteranlage nach Ausführungsform 59, wobei die Spannungsanpassungseinheit (130) eine Zwischenkreisspannung (Uz) des Frequenzumrichters (40) misst und durch einen Vergleich mit mindestens einem Referenzwert den Anstieg der Ausgangsspannung (U_{FU}) korrigiert.
61. Kältemittelverdichteranlage nach Ausführungsform 60, wobei die Spannungsanpassungseinheit (130) einen Proportionalitätskorrekturfaktor (PKF) erzeugt, mit welchem eine Korrektur des Anstiegs der Ausgangsspannung (U_{FU}) des Frequenzumrichters (40) erfolgt.
62. Kältemittelverdichteranlage nach Ausführungsform 60 oder 61, wobei die von der Spannungsanpassungseinheit (130) verwendeten Referenzwerte mindestens einen der Werte wie: eine Referenzfrequenz (f_{REF}), einen Proportionalitätsfaktor (PF) und einen Zwischenkreisspannungssollwert (Uzs) umfasst.
63. Kältemittelverdichteranlage nach einer der Ausführungsformen 59 bis 62, wobei der Frequenzumrichter (40) eine Frequenzumrichtersteuerung (78) aufweist, welche auf der Basis eines Frequenzanforderungssignals (FAS) ein Spannungssteuerungssignal (SSS) erzeugt, welches zusätzlich zu dem Frequenzanforderungssignal (FAS) einer Wechselrichterstufensteuerung (122) einer Wechselrichterstufe (114) des Frequenzumrichters zugeführt wird und dass die Spannungsanpassungseinheit (130) mit der Frequenzumrichtersteuerung (78) zur Steuerung des Anstiegs der Ausgangsspannung (U_{F}) über der Betriebsfrequenz (F) zusammenwirkt.
64. Kältemittelverdichteranlage nach Ausführungsform 63, wobei die Frequenzumrichtersteuerung (78) ein Proportionalglied (118) aufweist, welche auf der Basis des Frequenzanforderungssignals (FAS) das Spannungssteuerungssignal (SSS) erzeugt und dass die Spannungsanpassungseinheit (130) ein Proportionalitätsverhalten des Proportionalglieds (118) korrigiert.
65. Kältemittelverdichteranlage nach Ausführungsform 64, wobei mit dem Proportionalitätskorrekturfaktor (PKF) die Korrektur des Proportionalitätsverhaltens (PV) des Proportionalglieds (118) erfolgt.

Weitere Merkmale und Vorteile sind Gegenstand der nachfolgenden Beschreibung sowie der zeichnerischen Darstellung einiger Ausführungsbeispiele.

In der Zeichnung zeigen:
- Fig. 1: eine schematische Darstellung eines Kältemittelkreislaufs mit einer Kältemittelverdichtereinheit, betrieben mittels eines Umrichters;
- Fig. 2: eine schematische Darstellung eines Einsatzdiagramms der Kältemittelverdichtereinheit mit einem von einer Einsatzgrenze umschlossenen Einsatzfeld, welches die erlaubten Arbeitszustände der Kältemittelverdichtereinheit festlegt;
- Fig. 3: eine Darstellung eines Verlaufs einer Ausgangsspannung des Frequenzumrichters über einer Betriebsfrequenz sowie eines Verlaufs eines Arbeitszustandsbetriebsstromwerts über der Betriebsfrequenz;
- Fig. 4: eine schematische Darstellung einer Datenverarbeitungseinheit zur optimalen Auswahl eines Frequenzumrichters entsprechend einem ersten Ausführungsbeispiel der erfindungsgemäßen Lösung;
- Fig. 5: eine Darstellung eines Ersatzschaltbildes eines Antriebsmotors der Kältemittelverdichtereinheit mit Darstellung der Gleichungen für eine Motorimpedanz, eine elektrische Leistungsaufnahme und einen Arbeitszustandsbetriebsstromwert bei einer bestimmten Betriebsfrequenz;
- Fig. 6: eine schematische Darstellung eines erfindungsgemäßen Verfahrens zur Ermittlung von Begrenzungen des Einsatzfeldes bedingt durch die erfindungsgemäße Auswahl des Frequenzumrichters gemäß dem ersten Ausführungsbeispiel;
- Fig. 7: eine schematische Darstellung eines zweiten Ausführungsbeispiels eines erfindungsgemäßen Verfahrens zur Auswahl eines Frequenzumrichters;

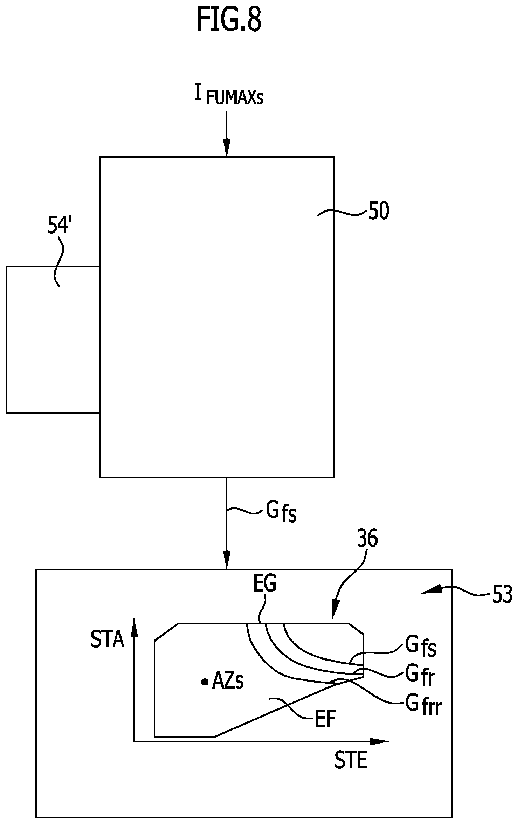

- Fig. 8: eine schematische Darstellung des zweiten Ausführungsbeispiels des erfindungsgemäßen Frequenzumrichters bei der Bestimmung der Einschränkungen des Einsatzfeldes;
- Fig. 9: eine schematische Darstellung eines Frequenzumrichters mit einer Frequenzbegrenzungseinheit;
- Fig. 10: eine schematische Darstellung eines Frequenzumrichters mit einer Spannungsanpasseinrichtung;
- Fig. 11: eine zeichnerische Darstellung eines Spannungssteuerungssignals für den Frequenzumrichter über der Betriebsfrequenz und
- Fig. 12: eine Darstellung von Ausgangsspannungen des Frequenzumrichters ähnlich Fig. 3 im Fall einer schwankenden Netzspannung.

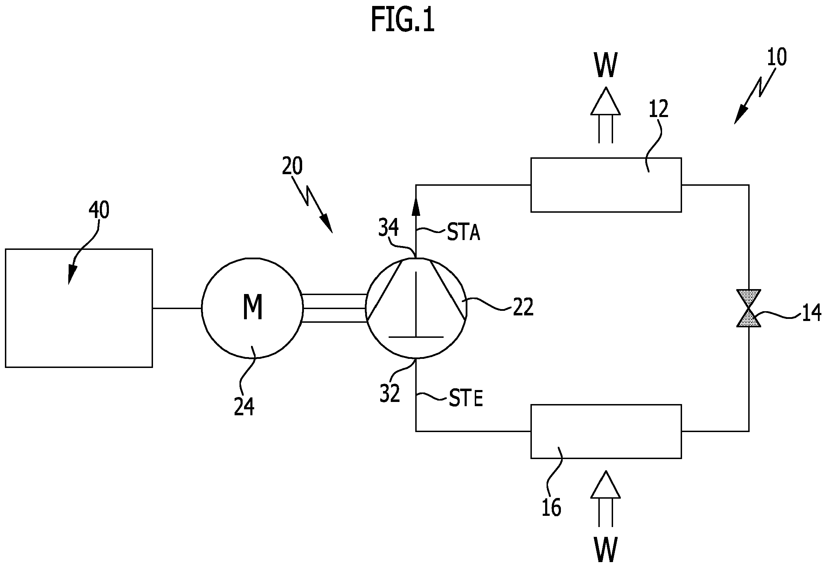

Ein in Fig. 1 schematisch dargestellter Kältemittelkreislauf 10 umfasst eine Kältemittelverdichtereinheit 20, welche einen Kältemittelverdichter 22 und einen den Kältemittelverdichter 22 antreibenden elektrischen Antriebsmotor 24 aufweist, wobei der Kältemittelverdichter 22 und der Antriebsmotor 24 beispielsweise in einer Einheit integriert sein können.

Der Kältemittelverdichter 22 in dem Kältemittelkreislauf 10 verdichtet das in diesem umlaufend geführte Kältemittel, das dann im Kältemittelkreislauf 10 einer druckseitigen Wärmetauschereinheit 12 zugeführt wird, in welcher das verdichtete Kältemittel durch Abgabe von Wärme W abgekühlt wird, insbesondere kondensiert.

Das abgekühlte, insbesondere kondensierte Kältemittel wird im Kältemittelkreislauf 10 einem Expansionsorgan 14 zugeführt, in welchem das verdichtete, insbesondere kondensierte und unter Druck stehende Kältemittel expandiert und dann im Kältemittelkreislauf 10 einer Wärmetauschereinheit 16 zugeführt wird, in welcher das expandierte Kältemittel in der Lage ist, Wärme W aufzunehmen, um dadurch seine Kühlwirkung zu entfalten.

Das in der Wärmetauschereinheit 16 expandierte Kältemittel wird nachfolgend wiederum dem Kältemittelverdichter 22 zugeführt und durch den Kältemittelverdichter 22 verdichtet.

Dem Kältemittelverdichter 22 wird somit an einem Einlass 32 das expandierte Kältemittel, das bereits in der Wärmetauschereinheit 16 Wärme aufgenommen hat, bei einer Sättigungstemperatur STE zugeführt, dann im Kältemittelverdichter 22 verdichtet und tritt an einem Auslass 34 des Kältemittelverdichters mit einer Sättigungstemperatur STA aus.

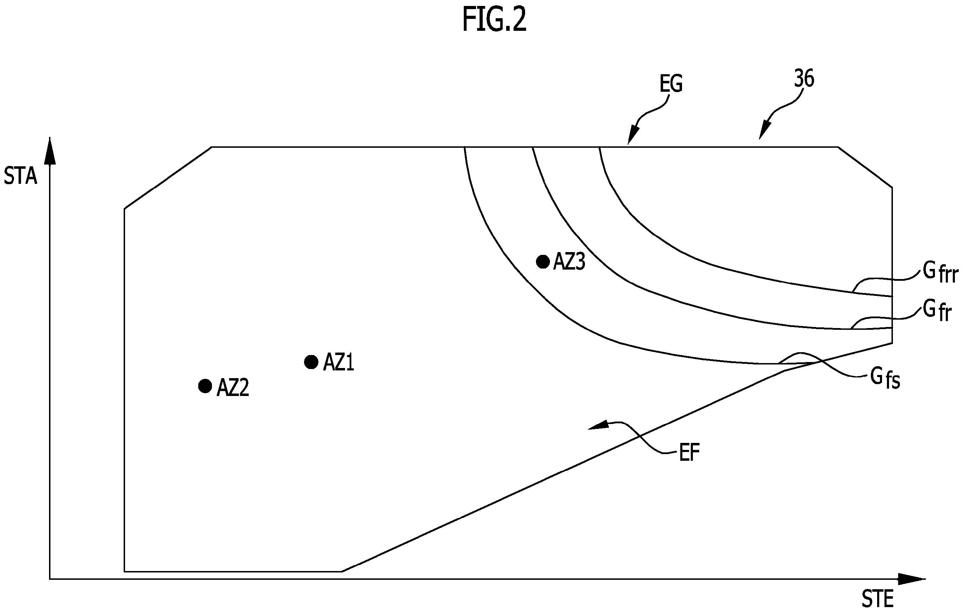

Der Kältemittelverdichter 22 arbeitet konstruktions- und kältemittelbedingt beschädigungsfrei nur bei bestimmten Wertepaarungen der Sättigungstemperatur STE am Einlass 32 und der Sättigungstemperatur STA am Auslass 34 des Kältemittelverdichters 22, die durch ein in Fig. 2 dargestelltes Einsatzdiagramm 36 definiert sind, wobei in dem Einsatzdiagramm 36 auf der X-Achse die Sättigungstemperatur STE am Einlass 32 und auf der Y-Achse die Sättigungstemperatur STA am Auslass 34 aufgetragen ist.

Dabei liegen in dem insbesondere auch kältemittelbedingt vorgegebenen Einsatzdiagramm 36 alle für den Kältemittelverdichter 22 zulässigen Wertepaarungen der Sättigungstemperatur STE am Einlass 32 und der Sättigungstemperatur STA am Auslass 34 des Kältemittelverdichters 22 in einem Einsatzfeld EF, das durch eine Einsatzgrenze EG allseitig umschlossen ist.

Derartige Einsatzdiagramme für Kältemittelverdichter sind beispielsweise in dem Buch "Lexikon der Kältetechnik" von Dieter Schmidt (Hrsg Verlag C. F. Müller), erläutert, auf welches diesbezüglich Bezug genommen wird.

Die innerhalb des Einsatzfeldes EF zulässigen Wertepaarungen der Sättigungstemperatur STE vom Einlass 32 und der Sättigungstemperatur STA am Auslass 34 definieren jeweils einen Arbeitszustand AZ des Kältemittelverdichters 22, der mit dem jeweiligen Kältemittelverdichter 22 realisiert werden kann.

Jeder Arbeitszustand AZ erfordert dadurch, dass der Kältemittelverdichter 22 durch den elektrischen Antriebsmotor 24 angetrieben ist, eine bestimmte elektrische Leistungsaufnahme P_{AZ} des Antriebsmotors 24.

Der elektrische Leistungsaufnahmewert P_{AZ} des Antriebsmotors 24 ist dabei einerseits abhängig von dem jeweiligen Arbeitszustand AZ im Einsatzfeld EF und andererseits abhängig von der Drehzahl des Kältemittelverdichters 22.

Wird der Kältemittelverdichter 22 bei verschiedenen Drehzahlen mittels eines Frequenzumrichters 40 betrieben, so ist die Drehzahl des Kältemittelverdichters 22 proportional zur Betriebsfrequenz f, mit welcher der Antriebsmotor 24 durch den Frequenzumrichter 40 gespeist wird.

Somit ist jedem Arbeitszustand AZ innerhalb des Einsatzfeldes EF bei einer bestimmten Betriebsfrequenz f ein elektrischer Leistungsaufnahmewert P_{AZ} zugeordnet.

Der elektrische Leistungsaufnahmewert P_{AZ} des elektrischen Antriebsmotors 24 hängt jedoch nicht nur von dem Arbeitszustand AZ des Kältemittelverdichters 22 ab, sondern auch von dem Typ des elektrischen Antriebsmotors 24 und der Verschaltung der Wicklungen desselben mit dem Frequenzumrichter 40.

Im dargestellten Ausführungsbeispiel wird davon ausgegangen, dass der elektrische Antriebsmotor 24 ein Asynchronmotor oder auch ein Permanentmagnetmotor ist, dessen Wicklungen mit dem Frequenzumrichter 40 in Sternschaltung verschaltet sind.

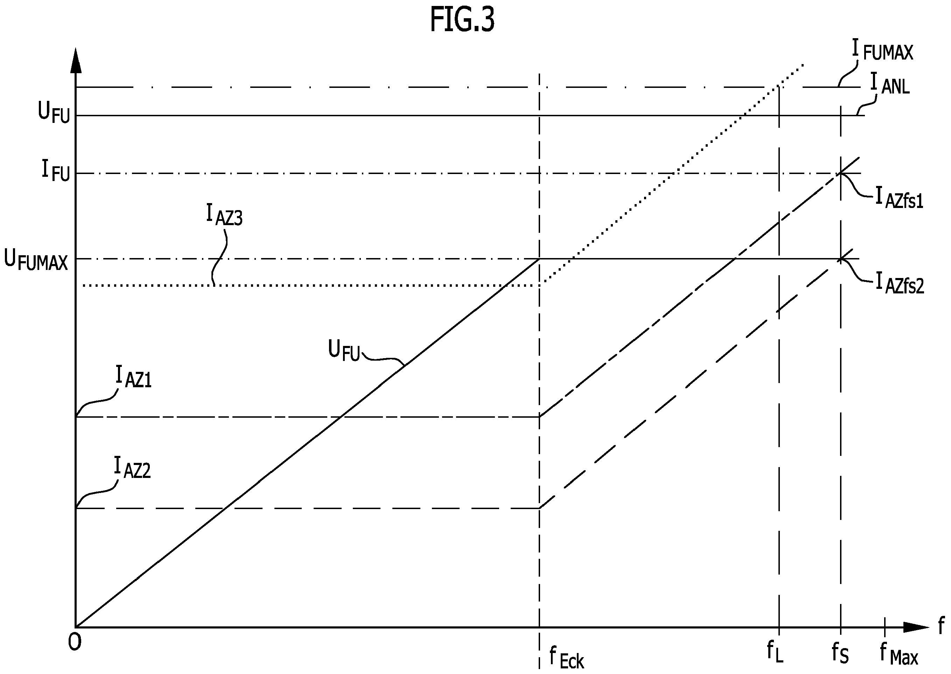

Diese Verschaltung des Antriebsmotors 24 mit dem Frequenzumrichter 40 hat zur Folge, dass, wie in Fig. 3 dargestellt, beim Frequenzumrichterbetrieb des Antriebsmotors 24 die vom Frequenzumrichter 40 erzeugte Ausgangsspannung U_{FU} ausgehend von der Betriebsfrequenz f = 0 mit zunehmender Betriebsfrequenz f linear ansteigt, bis zum Erreichen einer Eckfrequenz f_{ECK}, ab welcher die Ausgangsspannung U_{FU} nicht mehr ansteigt, sondern ihre maximale Ausgangsspannung U_{FUMAX} erreicht hat.

Bei einem weiteren Anstieg der Betriebsfrequenz f bis zu einer Maximalfrequenz fₘₐₓ bleibt die Ausgangsspannung U_{FUMAX}, mit welcher der Antriebsmotor 24 betrieben wird konstant.

Die maximale Betriebsfrequenz fₘₐₓ des Frequenzumrichters 40 zum Betreiben des elektrischen Antriebsmotors ist einerseits bedingt durch den Aufbau des elektrischen Antriebsmotors 24 und andererseits durch den Aufbau des Kältemittelverdichters 22 und liegt üblicherweise bei Werten von 80 Hertz oder weniger während die Eckfrequenz f_{ECK} üblicherweise im Bereich zwischen 40 und 60 Hertz liegt.

Bei dieser Betriebsweise des elektrischen Antriebsmotors 24 ist der Betriebsstrom im jeweiligen Arbeitszustand AZ ebenfalls abhängig von der Betriebsfrequenz f, so dass sich Arbeitszustandsbetriebsstromwerte I_{AZ} ergeben, die zwischen der Betriebsfrequenz f = 0 bis f_{eck} konstant sind, jedoch bei über der Eckfrequenz f_{ECK} liegenden Betriebsfrequenzen f weiter ansteigen, beispielsweise bis zu der maximalen Betriebsfrequenz fₘₐₓ.

Die maximale Ausgangsspannung U_{FUMAX}, die am Ausgang des Frequenzumrichters 40 zum Betrieb des Antriebsmotors 24 zur Verfügung steht, ist dabei proportional zur Zwischenkreisspannung des Frequenzumrichters 40 und somit proportional zur Versorgungsspannung des Frequenzumrichters 40.

Wie in Fig. 2 und 3 dargestellt, ist beispielsweise der Leistungsaufnahmewert P_{AZ1} in einem Arbeitszustand AZ1 des Einsatzdiagramms 36 höher als in einem Arbeitszustand AZ2 des Einsatzdiagramms 36, was, wie in Fig. 3 dazu führt, dass die Arbeitspunktbetriebsstromwerte I_{AZ1} bei höheren Werten liegen als die Arbeitspunktbetriebsstromwerte I_{AZ2} im Arbeitszustand AZ2.

In den Fig. 2 und 3 ist somit dargestellt, dass die vom Frequenzumrichter 40 zur Verfügung gestellten Arbeitszustandsbetriebsstromwerte I_{AZ} von den Arbeitszuständen AZ abhängen und somit der Frequenzumrichter 40 je nach Arbeitszustand AZ in der Lage sein muss, unterschiedlich hohe Arbeitszustandsbetriebsstromwerte I_{AZ} zu erzeugen.

Die Kosten des Frequenzumrichters 40 hängen davon ab, welchen Umrichtermaximalstromwert I_{FUMAX} ein Frequenzumrichter 40 zur Verfügung stellen kann und sind umso höher, je größer der Umrichtermaximalstromwert I_{FUMAX} ist.

Soll nun die Auswahl des Frequenzumrichters 40 entsprechend dem vom Nutzer der Kältemittelverdichtereinheit 20 bei seiner Anwendung vorgesehenen Arbeitszustand AZₛ, der beispielsweise der Arbeitszustand AZ1 oder AZ2 sein kann, und der ausgewählten Betriebsfrequenz fₛ optimiert werden, so lässt sich eine Auswahl des Frequenzumrichters 40 unter Berücksichtigung des vom Nutzer vorgesehenen Arbeitszustands AZₛ und der Betriebsfrequenzen fₛ dadurch optimieren, dass die Auswahl des Frequenzumrichters 40 unter Berücksichtigung des vorgesehenen Arbeitszustandes AZₛ und Betriebsfrequenz fₛ derart erfolgt, dass der Frequenzumrichter 40 so ausgewählt wird, dass der Umrichtermaximalstromwert I_{FUMAX} größer gewählt wird als der für den ausgewählten Arbeitszustand AZₛ bei der vorgesehenen Betriebsfrequenz fₛ erforderliche Arbeitszustandsbetriebsstromwert I_{AZfs}.

Hierzu ist der Arbeitszustandsbetriebsstromwert I_{AZfs} zu bestimmen.

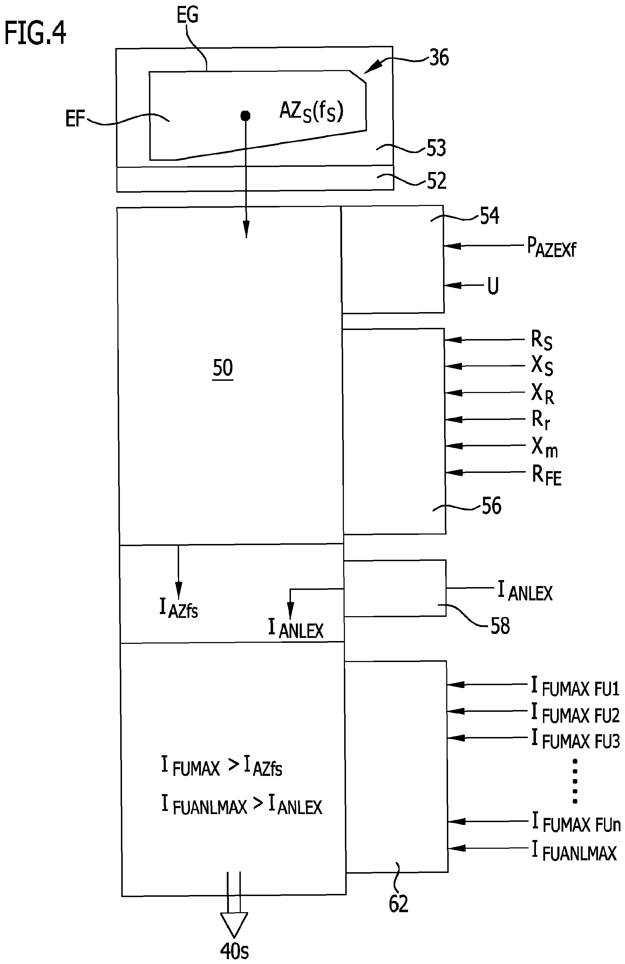

Die Bestimmung des Arbeitszustandsbetriebsstromwerts I_{AZfs} bei der jeweiligen Betriebsfrequenz fₛ erfolgt, wie in Fig. 4 dargestellt, mit einer Datenverarbeitungseinheit 50, umfassend eine Eingabeeinheit 52, insbesondere kombiniert mit einer Visualisierungseinheit 53, zur Darstellung des Einsatzdiagramms 36 und zur Auswahl des Arbeitszustandes AZₛ und der Betriebsfrequenz fₛ.

Hierzu arbeitet die Datenverarbeitungseinheit 50 mit experimentell bestimmten Antriebsdaten zur Charakterisierung des Antriebsmotors 24 der Kältemittelverdichtereinheit 20.

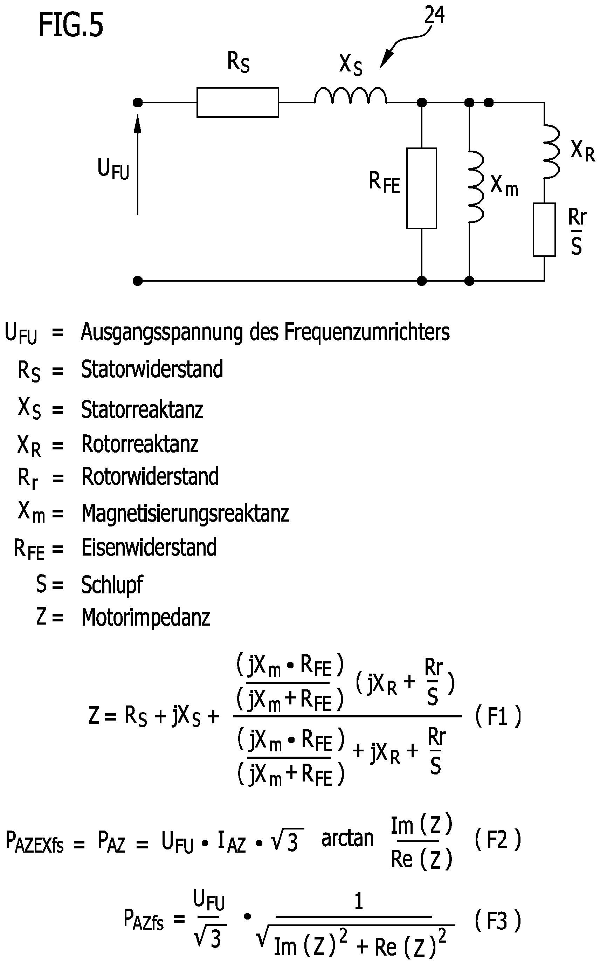

Beispielsweise ist bei einem ersten Ausführungsbeispiel vorgesehen, experimentell die Leistungsaufnahmewerte P_{AZ} für die jeweiligen Arbeitszustände AZ im Einsatzfeld EF der Kältemittelverdichtereinheit 20 bei der jeweiligen Betriebsfrequenz f zu bestimmen und in einem der Datenverarbeitungseinheit 50 zugeordneten Speicher 54 als experimentelle Leistungsaufnahmewerte P_{AZEXf} in Form eines Leistungsdatenfeldes abzulegen. Mit diesen elektrischen Leistungsaufnahmewerten P_{AZEXf} besteht dann unter Berücksichtigung des Steinmetz-Ersatzschaltbildes für den Antriebsmotor 24, dargestellt in Fig. 5 und der bekannten Widerstandswerte R und Reaktanzwerte X, die in einem der Datenverarbeitungseinheit 50 zugeordneten Speicher 56 gespeichert sind, die Möglichkeit die Impedanz Z gemäß Formel (F1) des Antriebsmotors 24 zu berechnen und dann bei Gleichsetzung des experimentell bestimmten Leistungsaufnahmewertes P_{AZfs} bei der ausgewählten Betriebsfrequenz f_{S} mit dem theoretischen Leistungsaufnahmewert P_{AZ} mit der Impedanz Z, den Schlupf s aus der Formel (F2) iterativ zu ermitteln und dann mit dem Schlupf s den Arbeitszustandsbetriebsstromwert I_{AZfs} aus der Formel (F3) bei der jeweiligen ausgewählten Betriebsfrequenz fₛ zu ermitteln.

Die in Fig. 5 dargestellten Zusammenhänge und Formeln können abhängig von den im Steinmetz-Ersatzschaltbild vorgenommenen Näherungen und Annahmen geringfügig variieren.

So ist ein Steinmetz-Ersatzschaltbild mit den dazugehörigen Formeln in dem Buch "THE PERFORMANCE AND DESIGN OF ALTERNATING CURRENT MACHINES", by M. G. SAY, THIRD EDITION, 1958, in PITMAN PAPERBACKS, 1968, SBN: 273 401998, Seite 270 ff. beschrieben.

Ein ähnliches Steinmetz-Ersatzschaltbild mit den entsprechenden Formeln ist im englischen WIKIPEDIA im Kapitel "Induction Motor", Stand 4. April 2016, und den dort genannten References zu finden.

Ausgehend von diesem Arbeitszustandsbetriebsstromwert I_{AZfs} erfolgt nun eine Ermittlung des geeigneten Frequenzumrichters 40 dahingehend, dass der vom Frequenzumrichter 40 zur Verfügung gestellte Umrichtermaximalstromwert I_{FUMAX} größer sein muss als der für den jeweiligen Arbeitszustand AZ bei der gewählten Frequenz f_{S} ermittelte Arbeitszustandsbetriebsstromwert I_{AZfs}.

Als weitere Randbedingung für den auszuwählenden Frequenzumrichter 40 wird ferner ein Anlaufstromwert I_{ANLEX} für die jeweilige Kältemittelverdichtereinheit 20 herangezogen, der ebenfalls experimentell ermittelt und in einem Speicher 58 gespeichert wurde und der gegebenenfalls größer als der Arbeitszustandsbetriebsstromwert I_{AZfs} sein kann.

Für ein Anlaufen der Kältemittelverdichtereinheit 20 ist der Frequenzumrichter 40 überlastfähig konzipiert, so dass kurzzeitig ein Umrichteranlaufmaximalstromwert I_{FUANLMAX} zur Verfügung steht, der größer ist als der Umrichtermaximalstromwert I_{FUMAX}, beispielsweise für einen Zeitraum von 3 Sekunden 170 % des Umrichtermaximalstromwerts I_{FUMAX} betragen kann.

Somit ist für die Auswahl des Frequenzumrichters 40, schematisch dargestellt in Fig. 4, maßgebend, dass der Umrichtermaximalstromwert I_{FU} größer ist als der Arbeitszustandsbetriebsstromwert I_{AZfs} und der Umrichteranlaufmaximalstromwert I_{FUANLMAX} größer ist als der Anlaufstromwert I_{ANLEX} der Kältemittelverdichtereinheit 20, wie dies beispielsweise in Fig. 3 dargestellt ist, wobei jedoch der Umrichtermaximalstrom I_{FUMAX} und der Umrichteranlaufmaximalstrom I_{FUANLMAX} möglichst nahe bei Arbeitszustandsbetriebsstromwert I_{AZfs} und dem Anlaufstromwert I_{ANLEX} liegen sollten, um einem Frequenzumrichter mit einem möglichst kleinen Umrichtermaximalstromwert I_{FUMAXs} auszuwählen, der die kostengünstigste Lösung darstellt.

Bei einem derart ausgewählten Frequenzumrichter 40 ist aufgrund des Auswahlverfahrens sichergestellt, dass dieser in der Lage ist, die Kältemittelverdichtereinheit 20 in dem ausgewählten Arbeitszustand AZₛ zu betreiben, es ist jedoch mit einem derart ausgewählten Frequenzumrichter 40 nicht sichergestellt, dass damit der Kältemittelverdichter 22 in allen Arbeitszuständen AZ innerhalb des Einsatzfeldes EF betrieben werden kann.

Vielmehr ist durch diese Vorgehensweise und die Wahl des Frequenzumrichters 40 dergestalt, dass dieser lediglich in der Lage sein muss, den Arbeitszustandsbetriebsstrom I_{AZfs} und den Anlaufstromwert I_{ANLEX} zu liefern, das Einsatzfeld EF eingeschränkt.

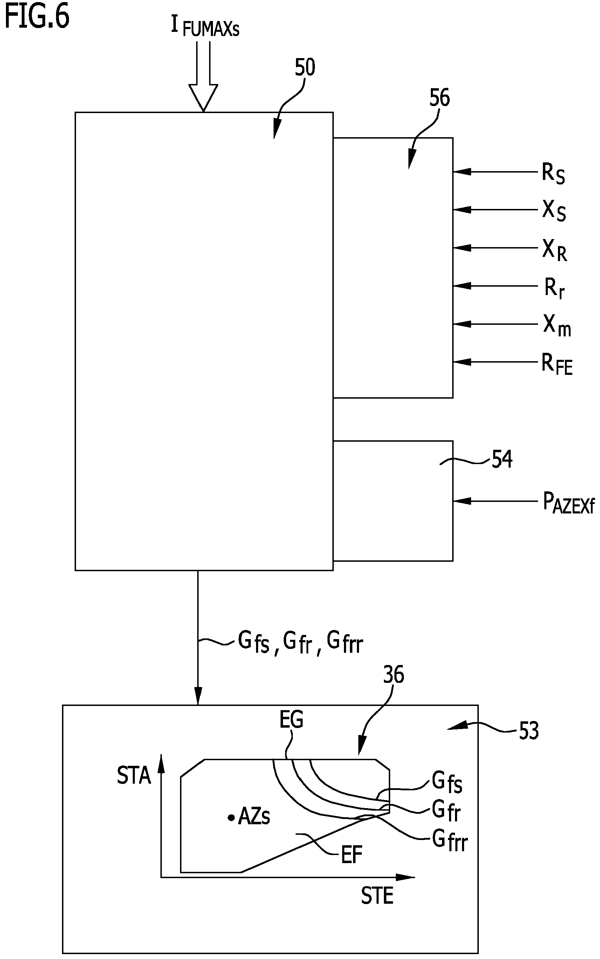

Um einem Nutzer die Einschränkung des Einsatzfeldes EF aufgrund der vorgenommenen Auswahl des Frequenzumrichters 40 sichtbar zu machen, erfolgt, wie beispielsweise in Fig. 6 dargestellt, auf der Basis des Umrichtermaximalstromwerts I_{FUMAXs} des ausgewählten Frequenzumrichters 40s eine Ermittlung der zu diesem Umrichtermaximalstromwert I_{FUMAX} gehörenden Arbeitszustände AZ im Einsatzfeld EF bei der gewählten Betriebsfrequenz fₛ oder auch bei anderen Betriebsfrequenzen f_{S}' unter Heranziehung des in Fig. 4 dargestellten Ersatzschaltbildes des Antriebsmotors 24 mit den bekannten Widerstandswerten R und den bekannten Reaktanzwerten X aus dem Speicher 56 und unter Heranziehung der in Fig. 5 dargestellten, zu dem Ersatzschaltbild des Antriebsmotors 24 gehörenden Formeln für die elektrische Leistungsaufnahme und den Arbeitszustandsbetriebsstrom I_{AZ} und unter Berücksichtigung der in dem Speicher 54 abgelegten Leistungsaufnahmewerte P_{AZEX} für die verschiedenen Arbeitszustände AZ im Einsatzfeld EF bei den jeweils ausgewählten Betriebsfrequenzen f_{S}.

Hierzu wird der Umrichtermaximalstromwert I_{FUMAXs} des ausgewählten Umrichters 40s für den Strom I_{AZfs} gemäß Formel F3 eingesetzt, daraus der Schlupf s bestimmt und mit der Formel F2 der Leistungsaufnahmewert P_{AZCAL} rechnerisch ermittelt und dann werden über die in Speicher 54 gespeicherten experimentellen Leistungsaufnahmewerte P_{AZEX} alle Arbeitszustände AZCAL(fs) ermittelt, die dem rechnerisch ermittelten Leistungsaufnahmewert P_{AZCAL} bei der ausgewählten Betriebsfrequenz f_{S} entsprechen.

Die Summe dieser Arbeitszustände A_{ZCALfs} ergibt eine Grenzlinie G_{fs} im Einsatzdiagramm 36, wie in Fig. 2 dargestellt.

Mit dieser Berechnung ergeben sich die in Fig. 2 und Fig. 6 dargestellten Grenzlinien G_{fs} für verschiedene ausgewählte Betriebsfrequenzen fₛ, beispielsweise repräsentiert die Grenzlinie G_{fs} die Grenzlinie für das Einsatzfeld EF bei der für die Auswahl des Frequenzumrichters 40 ausgewählten Betriebsfrequenz f_{S}, die Grenzlinie G_{fr} repräsentiert beispielsweise eine Grenzlinie für die Begrenzung des Einsatzfeldes EF bei einer kleineren Betriebsfrequenz fr als die ausgewählte Betriebsfrequenz f_{S} und die Grenzlinie G_{frr} repräsentiert beispielsweise eine Grenzlinie des Einsatzfeldes EF für eine noch kleiner gewählte Betriebsfrequenz frr, die von der Datenverarbeitungseinheit 50 auf einer Visualisierungseinheit 53 zusammen mit dem Einsatzdiagramm 36 dargestellt werden.

Damit stehen für einen Nutzer des erfindungsgemäßen Verfahrens gleichzeitig auch Informationen dafür zur Verfügung, welche Einschränkungen die Auswahl des Frequenzumrichters 40 entsprechend dem vorstehend beschriebenen Auswahlverfahren nach sich ziehen, und ein Nutzer kann überprüfen, ob diese Einschränkungen des Einsatzfeldes EF mögliche potentielle Arbeitszustände AZ, die für den Einsatz der Kältemittelverdichtereinheit 20 gegebenenfalls noch in Frage kommen könnten, damit ausgeschlossen werden oder nicht.

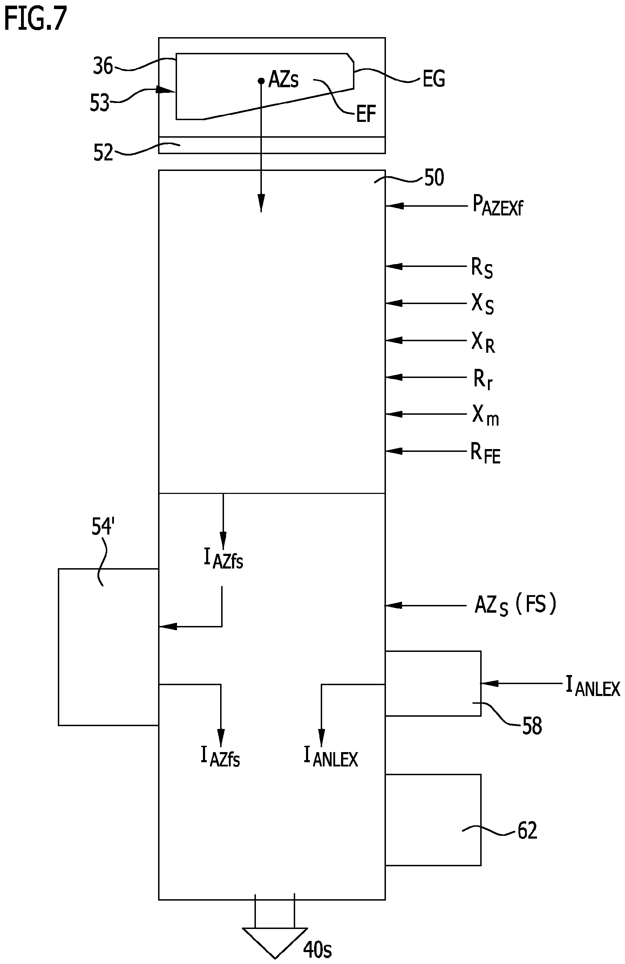

Bei einem zweiten Ausführungsbeispiel ist, wie in Fig. 7 dargestellt, alternativ zum ersten Ausführungsbeispiel vorgesehen, mit der Datenverarbeitungseinheit 50 zu jedem experimentell bestimmten Leistungsaufnahmewert P_{AZEXf} bei der jeweiligen Betriebsfrequenz f unter Heranziehung der gemäß Fig. 5 bekannten Widerstandswerte R und Reaktanzwerte X des Steinmetz-Ersatzschaltbildes zu jedem einzelnen Arbeitszustand AZ in der im Zusammenhang mit dem ersten Ausführungsbeispiel beschriebenen Art und Weise den Strom I_{AZf} zu ermitteln und in einem Speicher 54' abzulegen, so dass bei einer durch den Nutzer erfolgten Selektion des Arbeitszustands AZₛ und der ausgewählten Betriebsfrequenz fₛ unmittelbar in dem Speicher 56 auf den entsprechenden Arbeitszustandsbetriebsstromwert I_{AZfs} zugegriffen werden kann und dieser dem ausgewählten Arbeitszustand AZₛ entsprechende Arbeitszustandsbetriebsstromwert I_{AZfs} ohne weiteren Aufwand unmittelbar ausgelesen werden kann und unter Heranziehung des experimentell bestimmten Anlaufstromwerts I_{ANLEX} die Auswahl des Frequenzumrichters 40s unter Heranziehung der im Speicher 62 gespeicherten Frequenzumrichtermaximalströme I_{FUMAX}, wie in der im Zusammenhang bereits mit dem ersten Ausführungsbeispiel erläuterten Art und Weise beschrieben durchgeführt werden kann.

Desgleichen kann bei dem zweiten Ausführungsbeispiel nach Festlegung des Frequenzumrichters 40s der Frequenzumrichtermaximalstrom I_{FUMAXs} dazu herangezogen werden, im Speicher 54' die zu diesem Stromwert gehörenden Arbeitszustände AZCAL_{fs} zu ermitteln und die Summe aller dieser Arbeitszustände AZCAL_{fs} als die jeweilige Grenzlinie G_{fs} beispielsweise auf einer Visualisierungseinheit 64, wie im Zusammenhang mit dem ersten Ausführungsbeispiel beschrieben, darzustellen.

Bei einem dritten Ausführungsbeispiel ist alternativ zum ersten und zweiten Ausführungsbeispiel vorgesehen, analog zum zweiten Ausführungsbeispiel in dem Speicher 54' die Arbeitszustandsbetriebsstromwerte I_{AZf} experimentell zu bestimmen und im Speicher 54' abzulegen, so dass dann bei dem dritten Ausführungsbeispiel in ähnlicher Weise wie bei dem zweiten Ausführungsbeispiel ausgehend von den Werten im Speicher 54' die Auswahl des Frequenzumrichters 40s erfolgen kann.

Desgleichen kann die Datenverarbeitungseinheit 50 im umgekehrten Fall bei der Bestimmung der Grenzlinien G_{fs} entsprechend dem zweiten Ausführungsbeispiel vorgehen, wobei im Speicher 54' dann die experimentell bestimmten Arbeitszustandsbetriebsstromwerte I_{AZf} gespeichert sind, die dann zur Ermittlung der Grenzlinie G_{f} bei dem durch den ausgewählten Frequenzumrichter 40s festliegenden Umrichtermaximalstromwert I_{FUMAXs} herangezogen werden.

Die Frequenzsteuerung des eingesetzten Frequenzumrichters 40s erfolgt vorzugsweise durch eine Frequenzregeleinheit 70, die einerseits die Sättigungstemperatur STE oder auch alternativ den Sättigungsdruck am Eingang 32 des Kältemittelverdichters 22 erfasst und einem Vergleichsglied 74 zuführt, an welchem andererseits ein Temperaturvorgabesignal TV anliegt.

Abhängig davon, wie groß die Abweichung der Sättigungstemperatur STE von dem Temperaturvorgabesignal TV ist, erfolgt eine Ansteuerung eines Proportionalreglers 76, welcher ein Frequenzanforderungssignal FAS erzeugt, welches einer Frequenzumrichtersteuerung 78 zugeführt wird, die dann entsprechend dem Frequenzanforderungssignal FAS die Frequenz f des Frequenzumrichters 40s vorgibt, mit welcher dann der Antriebsmotor 24 betrieben wird.

Erfolgt die Auswahl des Frequenzumrichters 40s gemäß einem der vorstehend beschriebenen Ausführungsbeispiele, so kann, wie in Fig. 3 dargestellt, beim Betrieb der Kältemittelverdichtereinheit 20, wie in Fig. 2 und 3 auch ein Arbeitszustand AZ3 auftreten, bei welchem der Arbeitszustandsbetriebsstrom I_{AZ3}, wie in Fig. 3 dargestellt, so hoch liegt, dass bei Frequenzen f oberhalb der Eckfrequenz f_{ECK} der Fall eintreten kann, dass bereits bei einer Grenzfrequenz f_{L} der Umrichtermaximalstromwert I_{FUMAX} erreicht wird, wobei die Grenzfrequenz f_{L} niedriger liegt als die beispielsweise für den Arbeitszustand AZ1 vorgesehene Betriebsfrequenz fₛ.

Dies würde dazu führen, dass der Frequenzumrichter 40s bei üblichem Aufbau wegen Überlast abschaltet.

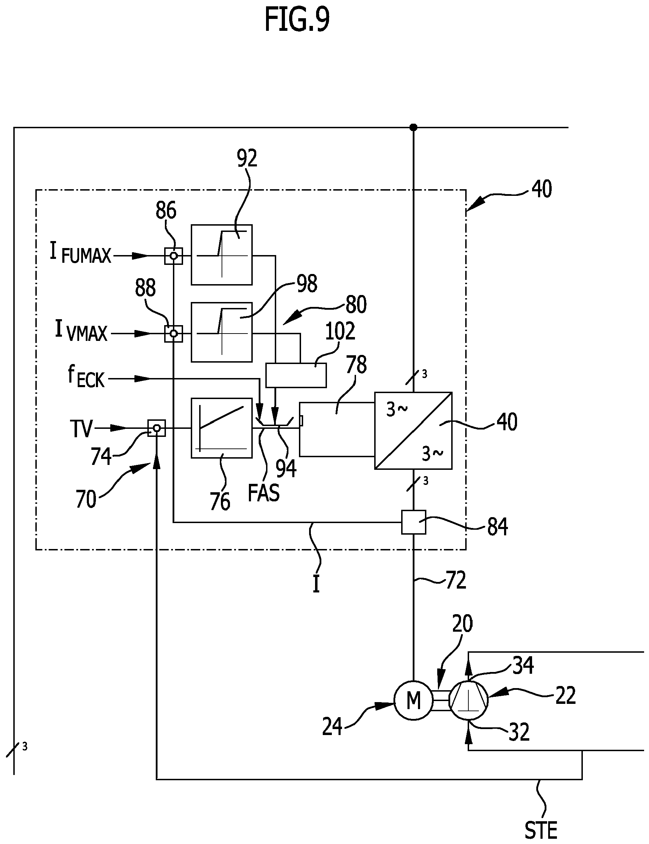

Aus diesem Grund ist bei einem erfindungsgemäßen Frequenzumrichter 40, wie in Fig. 9 dargestellt, eine Frequenzbegrenzungseinheit 80 vorgesehen, welche die Betriebsfrequenz f des Frequenzumrichters 40 dann, wenn diese oberhalb der Eckfrequenz f_{ECK} liegt, so begrenzt, dass der Arbeitszustandsbetriebsstromwert I_{AZ} nicht den Umrichtermaximalstromwert I_{FUMAXs} überschreitet, sondern höchstens den Umrichtermaximalstromwert I_{FUMAXs} erreicht.

Damit ist sichergestellt, dass auch bei Arbeitszuständen, die bei Betriebsfrequenzen f oberhalb der Eckfrequenz F_{ECK} zu einem den Umrichtermaximalstromwert I_{FUMAX} überschreitenden Strom des Frequenzumrichters 40 führen könnten, kein Abschalten des Frequenzumrichters 40 erfolgt.

Die Frequenzbegrenzungseinheit 80 umfasst, wie in Fig. 9 dargestellt, einen in einer Zuleitung 72, die vom Frequenzumrichter 40s zum Antriebsmotor 24 führt, angeordneten Stromsensor 84, der den tatsächlichen Arbeitszustandsbetriebsstromwert I_{AZ} misst und einem Vergleichsglied 86 zuführt, welches den tatsächlichen Arbeitszustandsbetriebsstromwert I_{AZ} mit dem Umrichtermaximalstromwert I_{FUMAX} als vorgegebenen Wert vergleicht und das Vergleichsergebnis einem Begrenzungsregler 92, beispielsweise einen Proportionalregler, zuführt, der dann, wenn der vom Stromsensor 84 tatsächlich gemessene Arbeitszustandsbetriebsstrom I_{AZ} größer ist als der als Referenzwert dienende Umrichtermaximalstromwert I_{FUMAX} ein Frequenzbegrenzungssignal für ein auf das Frequenzanforderungssignal FAS einwirkendes Frequenzbegrenzungsglied 94 erzeugt, das eine weitere Erhöhung der Betriebsfrequenz f verhindert.

Vorzugsweise ist noch zusätzlich ein mit dem Stromsensor 84 gekoppeltes Vergleichsglied 88 vorgesehen, welches den vom Stromsensor 84 gemessenen Arbeitszustandsbetriebsstromwert I_{AZ} mit einem Verdichtermaximalbetriebsstromwert I_{VMAX} vergleicht und einen Begrenzungsregler 98, beispielsweise einen Proportionalregler, ansteuert, der dann, wenn sich der vom Stromsensor 84 gemessene tatsächliche Arbeitszustandsbetriebsstromwert I_{AZ} dem Verdichtermaximalbetriebsstromwert I_{VMAX} annähert, ebenfalls ein frequenzbegrenzendes Signal erzeugt und dieses dem Frequenzbegrenzungsglied 94 übermittelt.

Vorzugsweise werden die frequenzbegrenzenden Signale der Begrenzungsregler 92 und 98 in einem Minimierungsglied 102 miteinander verglichen und es wird jeweils das frequenzbegrenzende Signal dem Frequenzbegrenzungsglied 94 zugeleitet, welches zu der am niedrigsten liegenden Grenzfrequenz f_{L} führt.

Ferner wird vorzugsweise dem Frequenzbegrenzungsglied 94 noch als Referenzwert die Eckfrequenz f_{ECK} übermittelt, welche die minimale Frequenz darstellt, auf welche eine Frequenzbegrenzung durch das Frequenzbegrenzungsglied 94 erfolgt.

Für einen optimalen Betrieb des Frequenzumrichters 40 ist der Anstieg der Ausgangsspannung U_{FU} des Frequenzumrichters 40 über der Frequenz f im Bereich von f = 0 bis f = f_{ECK} von Bedeutung, da der Anstieg der Ausgangsspannung U_{FU} über der Frequenz f des Frequenzumrichters 40 maßgeblich ist für die Ausbildung des Flusses in dem Antriebsmotor 24.

So lange die maximale Ausgangsspannung U_{FUMAX} konstant ist, hat dies zur Konsequenz, dass auch die Eckfrequenz f_{ECK} konstant sein kann, so dass der Anstieg der Ausgangsspannung U_{FU} über der Frequenz f stets ebenfalls konstant ist.

Schwankt jedoch bei einem Frequenzumrichter 40s die Versorgungsspannung, beispielsweise durch ein qualitativ schlechtes Versorgungsnetz, so ist die maximale Ausgangsspannung U_{FUMAX} des Frequenzumrichters 40 an dessen Ausgang nicht konstant, so dass bei einer konstanten Eckfrequenz f_{ECK} zwangsläufig der Anstieg der Ausgangsspannung U_{FU} im Frequenzbereich zwischen f = 0 bis f = f_{ECK} variieren würde.

Um auch bei nennenswerten Schwankungen des Versorgungsnetzes und somit nennenswerter Schwankung der maximalen Ausgangsspannung U_{FUMAX} des Frequenzumrichters 40 den Anstieg der Ausgangsspannung U_{FU} über der Frequenz konstant zu halten, ist es erforderlich auch entsprechend der Variation der maximalen Ausgangsspannung U_{FUMAX} die Eckfrequenz f_{ECK} zu variieren.

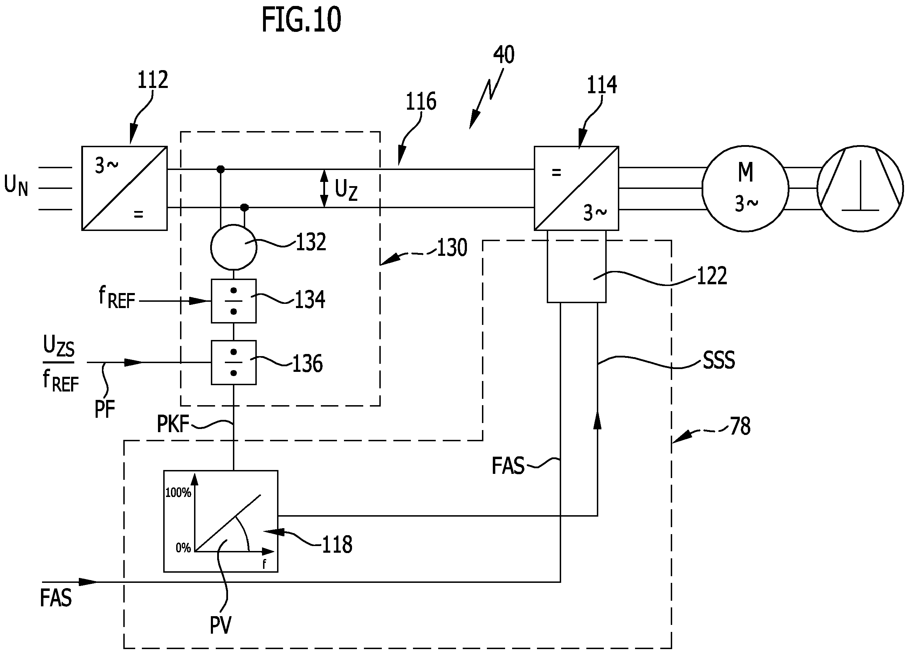

Ein konventioneller Frequenzumrichter 40, dargestellt in Fig. 10, umfasst eine Gleichrichterstufe 112, eine Wechselrichterstufe 114 und einen zwischen der Gleichrichterstufe 112 und der Wechselrichterstufe 114 vorgesehenen Zwischenkreis 116 mit welchem die Zwischenkreisspannung Uz als Gleichspannung anliegt.

Die Zwischenkreisspannung Uz ist dabei abhängig von der der Gleichrichterstufe 112 zugeführten Netzspannung U_{N} und schwankt proportional zur Netzspannung U_{N}.

Die Wechselrichterstufe 114 des Frequenzumrichters 40 wird dabei durch die Frequenzumrichtersteuerung 78 angesteuert, der das Frequenzanforderungssignal FAS zugeführt wird.

Die Frequenzumrichtersteuerung 78 erzeugt dabei auf der Basis des Frequenzanforderungssignals FAS mit Hilfe eines Proportionalgliedes 118 ein Spannungssteuerungssignal SSS, welches neben dem Frequenzanforderungssignal FAS einer Wechselrichterstufensteuerung 122 zugeführt wird, die basierend auf dem Frequenzanforderungssignal FAS und dem Spannungssteuerungssignal SSS, welches beispielsweise Prozentwerte der maximalen Ausgangsspannung U_{FUMAX} angibt, die Ausgangsspannung U_{FU} erzeugt.

Zur Anpassung an stark schwankende Netzspannungen U_{N} ist daher dem Frequenzumrichter 40 eine Spannungsanpasseinheit 130 zugeordnet, welche mit einer Spannungsmesseinheit 132 die Zwischenkreisspannung Uz im Zwischenkreis 116 misst und diese Zwischenkreisspannung Uz einem Dividierglied 134 zuführt, welchem außerdem eine Referenzfrequenz f_{REF} zugeführt wird.

Die Referenzfrequenz f_{REF} ist so bemessen, dass bei einem Soll-Wert Uzs der Zwischenkreisspannung Uz sich der für den Anstieg der Ausgangsspannung U_{FU} des Umrichters 40 über der Frequenz F erwünschte Proportionalitätsfaktor ergibt.

Das Ergebnis dieses Dividierglieds 134 wird einem weiteren Dividierglied 136 zugeführt, dem andererseits der gewünschte Proportionalitätsfaktor PF für den Anstieg der Ausgangsspannung U_{FU} des Frequenzumrichters 40 über der Betriebsfrequenz f zugeführt wird, der dem Zwischenkreisspannungssollwert Uzs dividiert durch die Referenzfrequenz f_{REF} entspricht.

Das Ergebnis des zweiten Dividierglieds 136 ist ein Proportionalitätskorrekturfaktor PKF, der dann eins ist, wenn das diesem Dividierglied 136 zugeführte Ergebnis des ersten Dividierglieds 134 dem gewünschten Proportionalitätsfaktor entspricht und von 1 abweicht, wenn die Zwischenkreisspannung Uz vom Zwischenkreisspannungssollwert Uzs abweicht.

Wird nun der vom Dividierglied 136 generierte Proportionalitätskorrekturfaktor PKF dem Proportionalglied 118 zugeführt, so lässt sich über diesen das im Proportionalglied 118 vorgesehene Proportionalitätsverhalten PV zwischen der Betriebsfrequenz f des Frequenzanforderungssignals FAS und dem Spannungssteuerungssignal SSS variieren.

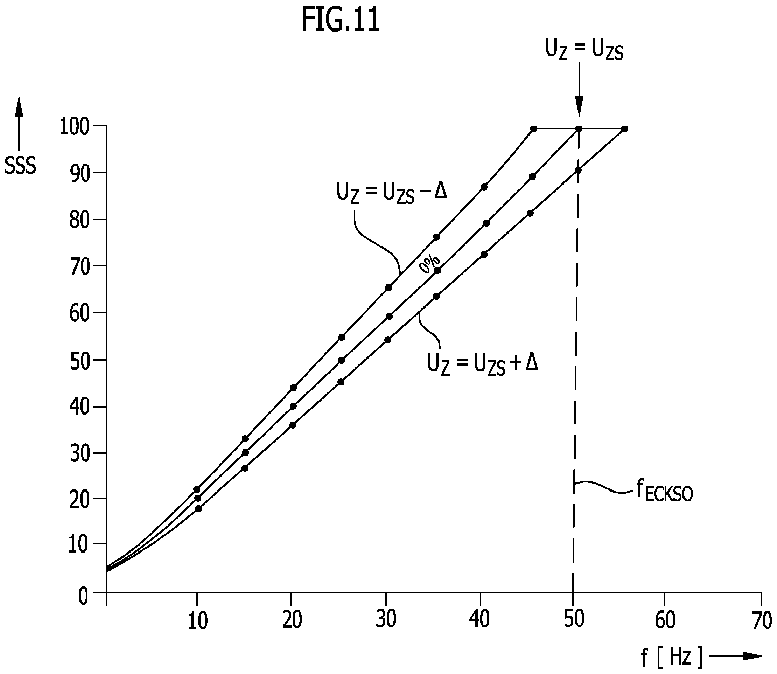

Wie die Proportionalität zwischen der Betriebsfrequenz f des Frequenzanforderungssignals FAS und dem Spannungssteuerungssignal SSS variiert, ist beispielsweise in Fig. 11 dargestellt.

Die Funktion der Spannungsanpasseinheit 130 ist dabei die, dass dann, wenn die Zwischenkreisspannung Uz dem Zwischenkreisspannungssollwert Uzs entspricht, wie in Fig. 11 dargestellt, die Eckfrequenz der Soll-Eckfrequenz f_{ECKSO} entspricht, die beispielsweise bei 50 Hertz liegt.

Weicht nun die Zwischenkreisspannung Uz von dem Zwischenkreisspannungssollwert Uzs um den Wert Δ ab, beispielsweise zu kleineren Spannungswerten, so wird das Spannungssteuerungssignal SSS von 100 % bei niedrigeren Betriebsfrequenzen als die Soll-Eckfrequenz f_{ECKSO} erreichen.

Liegt dagegen die Zwischenkreisspannung Uz um den Wert Δ über dem Zwischenkreisspannungssollwert Uzs, so wird das Spannungssteuerungssignal SSS von 100 % bei höheren Betriebsfrequenzen f als die Soll-Eckfrequenz f_{ECKSO} erreichen.

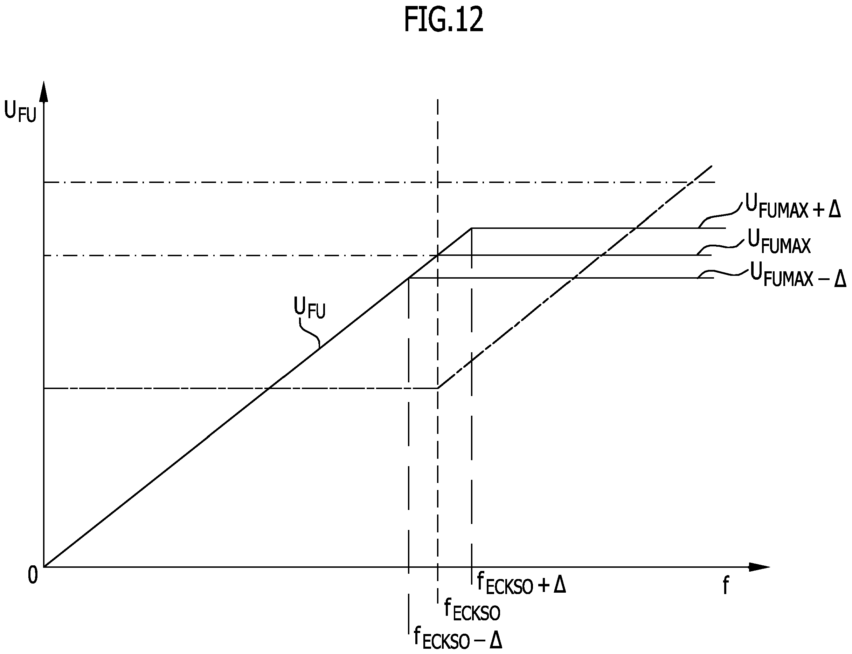

Dies führt, wie in Fig. 12 dargestellt, dazu, dass die Eckfrequenz F_{ECK}, also die Frequenz, bei welcher die maximale Ausgangsspannung U_{FUMAX} am Ausgang des Frequenzumrichters 40 erreicht ist, variiert, und zwar entsprechend der Abweichung der Zwischenkreisspannung Uz von dem Zwischenkreisspannungssollwert Uzs, so dass auch die maximale Ausgangsspannung U_{FUMAX} des Frequenzumrichters 40 variiert.

## Patentansprüche

1. Verfahren zur Auswahl eines Frequenzumrichters (40) für eine Kältemittelverdichtereinheit (20), umfassend einen Kältemittelverdichter (22) und einen elektrischen Antriebsmotor (24),
**dadurch gekennzeichnet , dass** ein für den Betrieb der Kältemittelverdichtereinheit (20) geeigneter Arbeitszustand (AZ) in einem Einsatzfeld (EF) eines Einsatzdiagramms (36) des Kältemittelverdichters (22) ausgewählt wird, dass zu diesem ausgewählten Arbeitszustand (AZₛ) eine Betriebsfrequenz (fₛ) ausgewählt wird und dass aus Antriebsdaten ein dem ausgewählten Arbeitszustand (AZₛ) und der ausgewählten Betriebsfrequenz (fₛ) entsprechender Arbeitszustandsbetriebsstromwert (I_{AZfs}) für den Betrieb der Kältemittelverdichtereinheit (20) ermittelt wird.

2. Verfahren nach Anspruch 1, **dadurch gekennzeichnet, dass** anhand des Arbeitszustandsbetriebsstromwerts (I_{AZfs}) aus Daten (I_{FUMAX}) von zur Auswahl stehenden Frequenzumrichtern (40) derjenige Frequenzumrichter (40s) ausgewählt wird, dessen Umrichtermaximalstromwert (I_{FUMAX}) gleich oder größer ist als der ermittelte Arbeitszustandsbetriebsstromwert (I_{AZfs}) und dass insbesondere derjenige Frequenzumrichter (40s) ausgewählt wird, dessen Umrichtermaximalstromwert (I_{FUMAX}) möglichst nahe bei dem Arbeitszustandsbetriebsstromwert (I_{AZfS}) liegt.

3. Verfahren nach einem der Ansprüche 1 oder 2, **dadurch gekennzeichnet, dass** der Frequenzumrichter (40s) so ausgewählt wird, dass dessen Umrichteranlaufmaximalstromwert (I_{FUANLMAX}) gleich oder größer ist als ein Anlaufstromwert (I_{ANL}) der Kältemittelverdichtereinheit (20), und/oder dass insbesondere für die Auswahl des Frequenzumrichters (40) ein abgespeicherter Anlaufstromwert (I_{ANL}) herangezogen wird, und/oder dass insbesondere der Anlaufstromwert (I_{ANL}) experimentell bestimmt wird, und/oder dass insbesondere der Frequenzumrichter (40s) so ausgewählt wird, dass dessen Umrichtermaximalstromwert (I_{FUMAX}) möglichst nahe bei dem Anlaufstromwert (I_{ANL}) liegt, und/oder dass insbesondere der Frequenzumrichter (40s) so ausgewählt wird, dass dessen Umrichtermaximalstromwert (I_{FUMAX}) möglichst nahe bei dem höheren der Werte von Arbeitszustandsbetriebsstromwert (I_{AZfS}) und Anlaufstromwert (I_{ANL}) liegt.

4. Verfahren nach einem der voranstehenden Ansprüche, **dadurch gekennzeichnet, dass** die Antriebsdaten experimentell bestimmt sind, dass insbesondere zu jedem Arbeitszustand (AZ) der Kältemittelverdichtereinheit (20) experimentelle Antriebsdaten für die möglichen auszuwählenden Betriebsfrequenzen (f) hinterlegt sind, und/oder dass insbesondere die Antriebsdaten die experimentell bestimmte Leistungsaufnahme (P_{AZEXf}) zu jedem Arbeitszustand (AZ) im Einsatzfeld (EF) bei den verschiedenen Betriebsfrequenzen (f) aufweisen, und dass insbesondere auf der Basis der experimentell ermittelten elektrischen Leistungsaufnahme (P_{AZEX}) bei der jeweiligen Betriebsfrequenz (f) unter Berücksichtigung eines Ersatzschaltbilds des Antriebsmotors (24) der Kältemittelverdichtereinheit (20) der Arbeitszustandsbetriebsstromwert (I_{AZfs}) bei der ausgewählten Betriebsfrequenz (fₛ) rechnerisch ermittelt wird.

5. Verfahren nach einem der voranstehenden Ansprüche, **dadurch gekennzeichnet, dass** zur Ermittlung des Arbeitszustandsbetriebsstromwerts (I_{AZ}) die Impedanz (Z) des Ersatzschaltbilds des Antriebsmotors (24) berücksichtigt wird, und/oder dass insbesondere zur Ermittlung des Arbeitszustandsbetriebsstromwerts (I_{AZ}) die experimentell ermittelte elektrische Leistungsaufnahme (P_{AZEX}) der Kältemittelverdichtereinheit (20) mit der sich aus dem Ersatzschaltbild ergebenden Leistungsaufnahme (P_{AZ}) gleichgesetzt und daraus der Schlupf (s) ermittelt wird, und/oder dass insbesondere anhand des ermittelten Schlupfes (s) und der Impedanz (Z) des Ersatzschaltbildes des Antriebsmotors (24) der Arbeitszustandsbetriebsstromwert (I_{AZ}) ermittelt wird.

6. Verfahren nach einem der voranstehenden Ansprüche, **dadurch gekennzeichnet, dass** die experimentell bestimmte elektrische Leistungsaufnahme (P_{AZ}) jedes Arbeitszustands (AZ) im Einsatzfeld (EF) bei der jeweiligen Betriebsfrequenz (f) festgehalten, insbesondere abgespeichert, wird.

7. Verfahren nach einem der Ansprüche 1 bis 5, **dadurch gekennzeichnet, dass** die aus der experimentell ermittelten elektrischen Leistungsaufnahme (P_{AZEX}) errechneten Arbeitszustandsbetriebsstromwerte (I_{AZf}) für jeden Arbeitszustand (AZ) und für jede Betriebsfrequenz (f) festgehalten, insbesondere abgespeichert, werden.

8. Verfahren nach einem der Ansprüche 1 bis 5, **dadurch gekennzeichnet, dass** der Arbeitszustandsbetriebsstromwert (I_{AZf}) für jeden Arbeitszustand (AZ) und jede Betriebsfrequenz (f) experimentell ermittelt und festgehalten, insbesondere abgespeichert, wird.

9. Verfahren nach einem der voranstehenden Ansprüche, **dadurch gekennzeichnet, dass** auf der Basis des Umrichtermaximalstromwerts (I_{FUMAXs}) des ausgewählten Frequenzumrichters (40s) die zu diesem Umrichtermaximalstromwert (I_{FUMAXs}) gehörenden Arbeitszustände (AZCAL) im Einsatzfeld (EF) bei einer ausgewählten Betriebsfrequenz (f) anhand der Antriebsdaten ermittelt werden, und dass insbesondere die zu dem Umrichtermaximalstromwert (I_{FUMAX}) ermittelten Arbeitszustände (AZCAL) visuell im Einsatzdiagramm (36) dargestellt werden.

10. Datenverarbeitungseinheit (50) zur Auswahl eines Frequenzumrichters (40) für eine Kältemittelverdichtereinheit (20), umfassend einen Kältemittelverdichter (22) und einen elektrischen Antriebsmotor (24), **dadurch gekennzeichnet, dass** die Datenverarbeitungseinheit eine Visualisierungseinheit (53) auf welcher ein für den Betrieb der Kältemittelverdichtereinheit (20) geeigneter Arbeitszustand (AZ) in einem Einsatzfeld (EF) eines Einsatzdiagramms (36) des Kältemittelverdichters (22) ausgewählt und zu diesem ausgewählten Arbeitszustand (AZₛ) eine Betriebsfrequenz (fₛ) ausgewählt wird und dass die Datenverarbeitungseinheit (50) aus in einem Speicher (54) abgespeicherten, Antriebsdaten einen dem ausgewählten Arbeitszustand (AZₛ) und der ausgewählten Betriebsfrequenz (fₛ) entsprechender Arbeitszustandsbetriebsstromwert (I_{AZfs}) für den Betrieb der Kältemittelverdichtereinheit (20) ermittelt.

11. Datenverarbeitungseinheit (50) nach Anspruch 10, **dadurch gekennzeichnet, dass** die Datenverarbeitungseinheit (50) anhand des Arbeitszustandsbetriebsstromwerts (I_{AZfs}) aus abgespeicherten Daten (I_{FUMAX}) von zur Auswahl stehenden Frequenzumrichtern (40) denjenigen Frequenzumrichter (40s) auswählt, dessen Umrichtermaximalstromwert (I_{FUMAX}) gleich oder größer ist als der ermittelte Arbeitszustandsbetriebsstromwert (I_{AZfs}), dass insbesondere die Datenverarbeitungseinheit (50) denjenigen Frequenzumrichter (40s) auswählt, dessen Umrichtermaximalstromwert (I_{FUMAX}) möglichst nahe bei dem Arbeitszustandsbetriebsstromwert (I_{AZfs}) liegt.

12. Datenverarbeitungseinheit (50) nach Anspruch 10 oder 11, **dadurch gekennzeichnet, dass** die Datenverarbeitungseinheit (50) den Frequenzumrichter (40s) so auswählt, dass dessen Umrichteranlaufmaximalstromwert (I_{FUANLMAX}) gleich oder größer ist als ein Anlaufstromwert (I_{ANL}) der Kältemittelverdichtereinheit (20), dass insbesondere die Datenverarbeitungseinheit (50) für die Auswahl des Frequenzumrichters (40) einen in einem Speicher (58) abgespeicherten Anlaufstromwert (I_{ANL}) heranzieht und/oder, dass insbesondere der Anlaufstromwert (I_{ANL}) experimentell bestimmt ist, und/oder dass insbesondere die Datenverarbeitungseinheit (50) den Frequenzumrichter (40s) so auswählt, dass dessen Umrichtermaximalstromwert (I_{FUMAX}) möglichst nahe bei dem Anlaufstromwert (I_{ANL}) liegt, und/oder dass insbesondere die Datenverarbeitungseinheit (50) den Frequenzumrichter (40s) so auswählt, dass dessen Umrichtermaximalstromwert (I_{FUMAX}) möglichst nahe bei dem höheren der Werte von Arbeitszustandsbetriebsstromwert (I_{AZfS}) und Anlaufstromwert (I_{ANL}) liegt.

13. Datenverarbeitungseinheit (50) nach einem der Ansprüche 11 bis 12, **dadurch gekennzeichnet, dass** die Antriebsdaten experimentell bestimmt sind, und dass insbesondere zu jedem Arbeitszustand (AZ) der Kältemittelverdichtereinheit (20) experimentelle Antriebsdaten für die möglichen auszuwählenden Betriebsfrequenzen (f) in dem Speicher (54) hinterlegt sind, und/oder dass insbesondere die Antriebsdaten die experimentell bestimmte Leistungsaufnahme (P_{AZEXf}) zu jedem Arbeitszustand (AZ) im Einsatzfeld (EF) bei den verschiedenen Betriebsfrequenzen (f) aufweisen, und dass insbesondere die Datenverarbeitungseinheit (50) auf der Basis der experimentell ermittelten elektrischen Leistungsaufnahme (P_{AZEX}) bei der jeweiligen Betriebsfrequenz (f) unter Berücksichtigung eines Ersatzschaltbilds des Antriebsmotors (24) der Kältemittelverdichtereinheit (20) den Arbeitszustandsbetriebsstromwert (I_{AZfs}) bei der ausgewählten Betriebsfrequenz (fₛ) rechnerisch ermittelt.

14. Datenverarbeitungseinheit (50) nach einem der Ansprüche 10 bis 13, **dadurch gekennzeichnet, dass** die Datenverarbeitungseinheit (50) zur Ermittlung des Arbeitszustandsbetriebsstromwerts (I_{AZ}) die Impedanz (Z) des Ersatzschaltbilds des Antriebsmotors (24) berücksichtigt, und/oder dass insbesondere die Datenverarbeitungseinheit (50) zur Ermittlung des Arbeitszustandsbetriebsstromwerts (I_{AZ}) die experimentell ermittelte elektrische Leistungsaufnahme (P_{AZEX}) der Kältemittelverdichtereinheit (20) mit der sich aus dem Ersatzschaltbild ergebenden Leistungsaufnahme (P_{AZ}) gleichsetzt und daraus der Schlupf (s) ermittelt, und/oder dass insbesondere die Datenverarbeitungseinheit (50) anhand des ermittelten Schlupfes (s) und der Impedanz (Z) des Ersatzschaltbildes des Antriebsmotors (24) den Arbeitszustandsbetriebsstromwert (I_{AZ}) ermittelt.

15. Datenverarbeitungseinheit (50) nach einem der Ansprüche 10 bis 14, **dadurch gekennzeichnet, dass** die Datenverarbeitungseinheit (50) die experimentell bestimmte elektrische Leistungsaufnahme (P_{AZ}) jedes Arbeitszustands (AZ) im Einsatzfeld (EF) bei der jeweiligen Betriebsfrequenz (f) abspeichert.

16. Datenverarbeitungseinheit (50) nach einem der Ansprüche 10 bis 14, **dadurch gekennzeichnet, dass** die Datenverarbeitungseinheit (50) die aus der experimentell ermittelten elektrischen Leistungsaufnahme (P_{AZEX}) errechneten Arbeitszustandsbetriebsstromwerte (I_{AZf}) für jeden Arbeitszustand (AZ) und für jede Betriebsfrequenz (f) abspeichert.

17. Datenverarbeitungseinheit (50) nach einem der Ansprüche 10 bis 14, **dadurch gekennzeichnet, dass** Arbeitszustandsbetriebsstromwert (I_{AZf}) für jeden Arbeitszustand (AZ) und jede Betriebsfrequenz (f) experimentell ermittelt und von der Datenverarbeitungseinheit (50) abgespeichert, wird.

18. Datenverarbeitungseinheit (50) nach einem der Ansprüche 10 bis 17, **dadurch gekennzeichnet, dass** die Datenverarbeitungseinheit (50) auf der Basis des Umrichtermaximalstromwerts (I_{FUMAXs}) des ausgewählten Frequenzumrichters (40s) die zu diesem Umrichtermaximalstromwert (I_{FUMAXs}) gehörenden Arbeitszustände (AZCAL) im Einsatzfeld (EF) bei einer ausgewählten Betriebsfrequenz (f) anhand der Antriebsdaten ermittelt, dass insbesondere die Datenverarbeitungseinheit (50) die zu dem Umrichtermaximalstromwert (I_{FUMAX}) ermittelten Arbeitszustände (AZCAL) auf der Visualisierungseinheit (53) im Einsatzdiagramm (36) darstellt.
